(19) Europäisches Patentamt
European Patent Office
Office européen des brevets

(11) **EP 2 511 538 A1**

(12) **EUROPÄISCHE PATENTANMELDUNG**

(43) Veröffentlichungstag:
**17.10.2012 Patentblatt 2012/42**

(51) Int Cl.:
*F16B 5/02* *(2006.01)*   *F16B 19/02* *(2006.01)*

(21) Anmeldenummer: **11405242.6**

(22) Anmeldetag: **11.04.2011**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**

(71) Anmelder: **Amec System GmbH**
**3368 Bleienbach (CH)**

(72) Erfinder: **Chalverat, Raymond Olivier**
**5736 Burg (CH)**

(74) Vertreter: **Rüfenacht, Philipp Michael et al**
**Keller & Partner**
**Patentanwälte AG**
**Schmiedenplatz 5**
**Postfach**
**3000 Bern 7 (CH)**

(54) **Modulares System für den Maschinen-,Sondermaschinen- und Anlagenbau**

(57) Ein modulares System zur Herstellung von Gefügen für den Maschinen-, Sondermaschinen- und Anlagenbau umfasst mehrere länglich geformte Bauteile, welche je mindestens zwei Öffnungen aufweisen, wobei zwei Bauteile über ein Verbindungselement (1000) spielfrei verbindbar sind. Damit wird die Konstruktion von besonders soliden und präzisen Gefügen ermöglicht, womit im Maschinen-, Sondermaschinen- und Anlagenbau Maschinenelemente verknüpft werden können.

Fig. 14

## Beschreibung

## Technisches Gebiet

Die Erfindung betrifft ein modulares System für den Maschinen-, Sondermaschinen- und Anlagenbau.

## Stand der Technik

Im Maschinen-, Sondermaschinen- und Anlagenbau werden technische Anlagen realisiert, wobei Maschinenelemente zum Beispiel mittels eines Unterbaus relativ zueinander so angeordnet werden, dass sie interagieren können. Die Interaktion kann dabei eine Werkstückübergabe, eine Werkstückbearbeitung, Energietransport (Strom, Heizmedium etc.), Stofftransport im Allgemeinen (beliebiger Aggregatszustand) umfassen. Um bei einer Werkstückübergabe ein Werkstück von einer Bearbeitungsstation zur nächsten übergeben zu können, werden die Bearbeitungsstationen respektive eine Übergabevorrichtung relativ zueinander geeignet angeordnet. Bei einer Werkstückbearbeitung wird das Werkstück in einer Haltevorrichtung relativ zum Bearbeitungswerkzeug gehalten respektive geführt. Auch bei Energie- oder Stofftransporten zwischen zwei Maschinenelementen ist eine geeignete Anordnung der beiden Maschinenelemente erforderlich. In sämtlichen Fällen kann dies durch einen geeigneten Unterbau erreicht werden. Die technischen Anlagen können aus den Fachbereichen Verfahrenstechnik, Energietechnik, Versorgungstechnik, Produktionstechnik, Maschinenbau und Elektrotechnik, etc. stammen.

Ein Aufbau eines solchen Unterbaus zur Anordnung von Anlagenteilen gemäss dem Stand der Technik weist die Nachteile auf, dass die Konstruktion eines Unterbaus zeitlich wie auch kostenmässig sehr aufwändig ist. Der Konstrukteur des Unterbaus ist typischerweise immer wieder mit vollkommen neuen Problematiken konfrontiert und benötigt eine sehr grosse Erfahrung, um solche Konstruktionen zu errichten. Aufgrund der Variabilität der verschiedenen Situationen muss der Konstrukteur typischerweise zuerst die Situation analysieren, um anschliessend die Bauteile für den Aufbau der Konstruktion in Auftrag zu geben, was viel Zeit in Anspruch nimmt. Zudem besteht eine grosse Fehleranfälligkeit bei der Analyse der Situation und bei der Herstellung der Bauteile, wobei nicht nur die Form der Bauteile, sondern auch die Materialwahl, insbesondere die Belastbarkeit des Materials nicht optimal oder gar unzureichend gewählt werden kann. Solche Umstände können dann schnell in einem exorbitanten Mehraufwand resultieren.

## Darstellung der Erfindung

Aufgabe der Erfindung ist es, eine dem eingangs genannten technischen Gebiet zugehörendes System für den Maschinen-, Sondermaschinen- und Anlagenbau zu schaffen, welches präzise und schnell aufgebaut werden kann.

Die Lösung der Aufgabe ist durch die Merkmale des Anspruchs 1 definiert. Gemäss der Erfindung umfasst das modulare System mehrere länglich geformte Bauteile, welche je mindestens zwei Öffnungen aufweisen, wobei zwei Bauteile über ein Verbindungselement spielfrei verbindbar sind.

Mittels der länglichen Bauteile können solide und präzise Gefüge aufgebaut werden, womit im Maschinen-, Sondermaschinen- und Anlagenbau Maschinenelemente verknüpft werden können. Diese Gefüge stellen häufig hohe Anforderungen an die Präzision, insbesondere wenn mehrere Maschinenteile über ein solches Gefüge verbunden werden, welche mechanisch interagieren und so Kräfte auf das Gefüge ausüben. Diesen Anforderungen wird erfindungsgemäss mittels der geeigneten Wahl und der hohen Präzision der Bauteile entsprochen. Das modulare System hat den Vorteil, dass es individuell den jeweiligen Anforderungen im Maschinen-, Sondermaschinen- und Anlagenbau angepasst werden kann. So kann zum Beispiel die Stabilität eines Gefüges über eine Anzahl Verstrebungen gesteuert werden, wobei auch die Ökonomie berücksichtigt werden kann, indem entsprechend nicht zu viele Verstrebungen verbaut werden müssen. Dem Konstrukteur / Monteur kann in der Verwendung ein Bausatz mit verschiedenen Bauteiltypen zur Verfügung gestellt werden, womit dieser ein Gefüge zur Anordnung von Maschinenteilen, Leitungen etc. erstellen kann. Damit kann weiter Zeit eingespart werden, da unter Verwendung des Bausatzes keine respektive nur wenige Bauteile nachbearbeitet werden müssen. Falls die Verbindungselemente reversibel sind, das heisst zum Beispiel als Schraubverbindung ausgebildet sind, kann das Gefüge gegebenenfalls auch abgebaut und zum Aufbau eines vollkommen anderen Gefüges eingesetzt werden.

Vorzugsweise bestehen die Bauteile und die Verbindungselemente jeweils aus einem metallischen Werkstoff, welcher in unterschiedlicher Zusammensetzung und Festigkeit vorliegen kann. In einer besonders bevorzugten Ausführungsform bestehen die Bauteile und die Verbindungselemente aus einem Stahl, insbesondere aus nichtrostendem, säurebeständigem, mit z.B. einem hohen Chromgehalt, oder vergütetem Stahl. Damit kann ein eine hohe Stabilität aufweisendes Gefüge geschaffen werden. Weiter können auch Aluminium, Kupfer, Nickel etc. und deren Legierungen eingesetzt werden. Die Wahl des Werkstoffes erfolgt dabei in Abhängigkeit des Einsatzes. Dem Fachmann sind auch weitere Werkstoffe bekannt, welche für die Bauteile und die Verbindungselemente eingesetzt werden können. Je nach mechanischer Belastungsanforderung und/oder chemischer Resistenzanforderung können auch Kunststoffe, insbesondere faserverstärkte Kunststoffe wie Kevlar oder kohlefaserverstärkte Kunststoffe eingesetzt werden.

Die Bauteile, insbesondere die verschiedenen Bauteile oder Bestandteile der Bauteile, und die Verbindungselemente können auch aus unterschiedlichen Werkstoffen gefertigt sein. Dies hat den Vorteil, dass die einzelnen Bauteile und die Verbindungselemente hinsichtlich deren Belastungen im Einsatz und/oder hinsichtlich einer effizienten und kostengünstigen Produktion optimiert werden können. Zudem besteht damit die Möglichkeit, gewisse Bauteile nachbearbeitbar zu gestalten, so dass diese mittels üblicher Geräte, wie Bohrmaschinen, Fräsen etc. vom Verwender angepasst werden können.

Im Folgenden wird der Begriff axial jeweils für eine Achse verwendet, welche koaxial mit der Achse eines Gewindeteils, insbesondere eines Innen- oder Aussengewindes verläuft. Der Begriff radial ist jeweils als rechtwinklig zur Achse zu verstehen. Eine Öffnung ist jeweils als zylinderförmige Ausnehmung definiert und weist eine Öffnungsachse auf, welche wiederum als Zylinderachse definiert ist.

Als Spiel wird hier der Bewegungsfreiraum zwischen dem Verbindungselement und den beiden zu verbindenden Bauteile verstanden. Durch die spielfreie Verbindung können Kräfte aufgenommen werden, ohne die Stabilität des Gefüges zu gefährden. Die Verbindung der Bauteile ist vorzugsweise sowohl bezüglich der Öffnungen in axialer wie auch in radialer Richtung spielfrei, wobei Spielfreiheit in axialer Richtung bevorzugt unabhängig von der Spielfreiheit in radialer Richtung ist.

Bevorzugt wird ein Verbindungselement, welches schon vor der axialen Fixierung radial spielfrei ist. Dies hat den Vorteil, dass schon vor der axialen Fixierung eine exakte Positionierung der Bauteile in radialer Richtung erreicht werden kann. Des Weiteren können damit radiale Kräfte weitgehend unabhängig von der axialen Fixierung aufgenommen werden.

Vorzugsweise ist das Verbindungselement derart ausgeführt, dass eine Verstiftung und eine Verschraubung mindestens zweier Bauteile, welche so angeordnet sind, dass jeweils eine Öffnung der mindestens zwei Bauteile koaxial angeordnet sind, durch diese Öffnungen erreichbar sind. Damit wird eine besonders solide Verbindung von Bauteilen geschaffen. Durch die Verstiftung wird eine grosse Kontaktfläche zwischen dem Verbindungselement und der Öffnungsinnenwand erreicht, womit radiale Kräfte optimal aufgenommen werden können. Mittels der Verschraubung können die Bauteile axial aneinander gepresst werden, womit eine Lage der Bauteile relativ zueinander bezüglich eines durch eine Rotationsachse der Schraube definierten Drehpunktes, sowie einer axialen Lage fixiert werden kann.

In Varianten kann in Abhängigkeit des Verwendungszwecks, insbesondere der geforderten Präzision und der ausgesetzten Belastungen, auf die Verstiftung verzichtet werden. In diesem Fall kann die radiale Fixierung zum Beispiel über ein Gewinde einer Schraube erfolgen. Um die Kontaktfläche zu vergrössern, können die Öffnungen auch ein Innengewinde aufweisen, welches mit dem Gewinde der Schraube zusammenwirkt. Dies hätte allerdings den Nachteil, dass eine Einstellung eines Winkels zwischen den Bauteilen nur bedingt möglich wäre.

Vorzugsweise liegt das modulare System in mehreren, insbesondere in zwei Baugrössen vor. Die Öffnungen der länglich geformten Bauteile sind vorzugsweise in einem im Wesentlichen plattenförmigen Bereich ausgebildet. Die Dicke der plattenförmigen Bereiche liegt vorzugsweise zwischen 2 und 10 mm, bevorzugt zwischen 3 und 6 mm, besonders bevorzugt ungefähr 3 oder 5 mm. Dabei beträgt die Plattenstärke vorzugsweise für eine kleinere Ausführungsform ungefähr 3 mm und in einer grösseren Ausführungsform ungefähr 5 mm. Vorzugsweise weist eine Öffnung einen Durchmesser zwischen 4 und 12 mm, bevorzugt 6.5 mm für die kleinere und 10.5 mm für die grössere Ausführungsform auf.

Die mehreren Öffnungen können in einem Raster vorliegen. In diesem Fall beträgt ein Lochabstand bevorzugt zwischen 8 mm und 35 mm, bevorzugt 12.5 mm für die kleinere und 25 mm für die grössere Ausführungsform. Die Wahl der Ausführungsform erfolgt nach den jeweiligen Anforderungen des Einsatzes. Dem Fachmann ist allerdings klar, dass auch andere Plattenstärken vorgesehen sein können, welche ausserhalb der obigen Bereiche liegen können. Sämtliche obigen Dimensionen können für spezifische Anwendungsgebiete grundsätzlich beliebig variiert und angepasst werden.

In einer bevorzugten Ausführungsform liegt das modulare System als Baukasten vor, welcher mehrere Bauteile umfasst. Die Bauteile können zudem in verschiedenen Varianten vorliegen. Bevorzugt sind die Bauteile aus mindestens zwei der folgenden Klassen ausgewählt:

a) Stabelemente, mit einer oder mehreren parallelen Reihen von Öffnungen, wobei benachbarte Öffnungen in einer Reihe und gegebenenfalls die Reihen untereinander einen Abstand a aufweisen.
Die Stabelemente sind vorzugsweise plattenförmig ausgebildet. Die Platten sind vorzugsweise im Bereich der äussersten Öffnungen koaxial zu denselben arrondiert. Bei den einreihigen Ausführungsformen weist die Arrondierung eine Halbkreisform auf, während bei den mehrreihigen Ausführungsformen die Arrondierung als Viertelkreis ausgebildet ist. Damit werden eine höhere Bewegungsfreiheit der Stabelemente bei der Montage respektive ein grösserer Anordnungsspielraum erreicht. Zum Beispiel können damit zwei Stabelemente, welche jeweils über eine endständige Öffnung mit benachbarten Öffnungen eines weiteren Stabelements montiert sind, in einem grossen Bereich relativ zueinander verschwenkt werden, ohne sich gegenseitig sterisch zu behindern. Die Stabelemente können, insbesondere bezüglich der Anzahl Öffnungen, weitgehend beliebig ausgebildet sein. Die ein- und doppelreihigen Ausführungsformen können zum Beispiel zwischen 2 und 20 Öffnungen in einer Reihe aufweisen. Die Anzahl Reihen beträgt vorzugsweise 1 oder 2, wobei auch mehr als 2 denkbar sind.

In Varianten müssen die Abstände nicht unbedingt konstant sein. Insbesondere können die Reihen untereinander einen anderen Abstand aufweisen. Es ist auch denkbar, auf gewisse Öffnungen zu verzichten, um beispielsweise dem Anwender eine individuelle Anpassung der Anordnung von Öffnungen zu ermöglichen. In diesem Fall ist es von Vorteil, wenn der Anwender über eine Infrastruktur zur Ausbildung von Öffnungen in der notwendigen Toleranz verfügt.

b) Linearstreben, mit einer Reihe von Öffnungen, wobei benachbarte Öffnungen zueinander einen Abstand $\sqrt{2}$ a aufweisen.

Die Linearstreben sind ähnlich aufgebaut wie die Stabelemente und können für Verstrebungen in einem Gefüge eingesetzt werden. Damit kann die Stabilität des Gefüges erhöht und den auszusetzenden Belastungen angepasst werden. Im Unterschied zu den Stabelementen beträgt der Abstand $\sqrt{2}$ a, so dass die Lochabstände bei in einem Winkel von 45° zu den Stabelementen montiertem Zustand das Lochraster des Gefüges aufrecht erhalten werden können. In einem eine rechteckige xy-Ebene definierenden Gefüge aus Stabelementen, welches Linearstreben in einem Winkel von 45° zu einer x oder y-Achse umfasst, liegen damit zwei Öffnungen in x-respektive in y-Richtung jeweils um n*a auseinander, wobei n eine ganze Zahl ist. Die Linearstreben können aber auch in anderen Winkeln als 45° orientiert sein, womit gegebenenfalls ein Längenkorrektur-Element, wie zum Beispiel eine Regulier- oder Justiereinheit eingesetzt werden muss (siehe unten). Auch die Linearstreben sind vorzugsweise, aus demselben Grund wie die Stabelemente, im Bereich der endständigen Öffnungen koaxial zur Öffnung arrondiert. Bevorzugt weisen sie zudem zwischen der endständigen Öffnung und der zur endständigen Öffnung benachbarten Öffnung eine Verjüngung auf, welche als seitliche Ausnehmung in der plattenförmigen Grundform ausgebildet sind. Die Ausnehmungen weisen vorzugsweise die Form eines Kreissegments auf. Damit werden zum Beispiel die Bewegungsfreiheiten der Linearstreben während der Montage respektive ein Anordnungsspielraum weiter vergrössert.

Statt dem Faktor $\sqrt{2}$ kann auch ein anderer Faktor vorgesehen sein, welcher das Lochraster bei einer Montage der Linearstreben in einem anderen Winkel als 45° aufrecht erhält.

c) Z-Streben, mit zwei endständig angeordneten Öffnungen, welche zueinander parallel ausgerichtet sind und wobei durch die Öffnungen verlaufende Achsen in der Z-Ebene liegen.

Die Z-Streben weisen vorzugsweise genau zwei Öffnungen auf. Die Z-Streben weisen als Grundelement ein plattenförmiges Element auf, welches im Wesentlichen demjenigen der Stabelemente entspricht, wobei jedoch keine Öffnungen vorgesehen sind. Endständig weist das plattenförmige Element jeweils einen Knick in einem Winkel von 45° mit einer Öffnung auf. Die beiden Knickwinkel können sich auch in dem Sinne unterscheiden, dass die Summe jeweils 180° ergibt, das heisst, die Öffnungen sind in jedem Fall zueinander parallel ausgerichtet, aber die Neigung des Grundelements zu einer Öffnungsachse kann auch zum Beispiel 60° oder auch einen anderen Wert aufweisen. Achsen durch die beiden Öffnungen liegen in derselben Ebene wie eine Längsachse des Grundelements. Die Z-Strebe weist eine Rotationssymmetrie um eine Achse rechtwinklig zu einer Längsrichtung des Grundelements bei einer Rotation um 180° auf. Die Z-Streben können als Verstrebung zwischen zwei Stabelementen eingesetzt werden, bei welchen Achsen durch die Öffnungen parallel verlaufen.

In Varianten können die Z-Streben im plattenförmigen Element zusätzliche Öffnungen aufweisen.

d) C-Streben, welche zwei koaxiale Öffnungen aufweisen.

Die C-Streben entsprechen weitgehend den Z-Streben, wobei lediglich der Knickwinkel jeweils 90° beträgt und wobei die Öffnungen koaxial angeordnet sind. Bezüglich einer Längsachse des Grundelements sind die geknickten Bereiche radial auf dieselbe Seite orientiert.

e) Winkelstreben, welche endständig zwei zueinander rechtwinklig orientierte Öffnungen aufweisen, wobei durch die Öffnungen verlaufende Achsen einen Schnittpunkt aufweisen.

Die Winkelstreben sind im Wesentlichen gemäss den C-Streben ausgebildet, wobei die geknickten Bereiche bezüglich der Längsachse des Grundelements auf dieselbe Seite ausgerichtet sind, aber nicht einen rechten Winkel zur Längsachse aufweisen. Die durch die beiden Öffnungen verlaufenden Achsen weisen einen Schnittwinkel von mehr als 0° auf. Die Winkel zwischen der Achse durch eine Öffnung und der Längsachse können bei einer Winkelstrebe unterschiedlich sein. Die Winkelstreben sind damit so ausgebildet, dass zum Beispiel zwei zueinander rechtwinklig stehende Stabelemente verstrebt werden können, wobei die Winkelstrebe, je nach obig beschriebener Ausführungsform, in einem weitgehend beliebigen Winkel zu einem Stabelement liegen kann. Vorzugsweise sind die Winkelstreben aber so dimensioniert, dass sie mit dem Lochraster der Stabelemente in zueinander rechtwinklig verbautem Zustand korrelieren.

f) Eckelemente, welche drei Seitenflächen umfassen, die paarweise orthogonal über einen Randbereich miteinander verbunden sind und wobei die Seitenflächen jeweils mindestens eine Öffnung aufweisen. Die Eckelemente ermöglichen bei der Konstruktion eine Richtungsänderung des nächsten zu verbindenden Bauteils, um 90°, womit der Bau von dreidimensionalen Gefügen, zum Beispiel quaderförmigen Konstruktionen, ermöglicht wird.

Mindestens zwei der Seitenflächen sind vorzugsweise im Wesentlichen rechteckig ausgebildet, wobei eine Ecke, welche an zwei Seiten angrenzt, welche beide nicht mit einer weiteren Seitenfläche verbunden sind, abgerundet sein kann. Eine dritte Seitenfläche ist vorzugsweise entweder rechteckig oder dreieckig ausgebildet, wobei bei der dreieckigen Ausbildung die angrenzenden Seitenflächen über zwei einen rechten Winkel einschliessende Seitenflächen verbunden sind. In einer bevorzugten Ausführungsform umfassen die Seitenflächen eine oder zwei Reihen à 1, 2 oder 3 Öffnungen, wobei in einem Eckelement auch Kombinationen von verschiedenen Seitenflächen vorgesehen sein können. Vorzugsweise weisen sie aber im Bereich der Verbindungen gleiche Längen auf, das heisst auch eine entsprechend übereinstimmende Anzahl Öffnungen.

In einer weiteren Ausführungsform können die Eckelemente zwischen zwei der drei Seitenflächen auch einen Winkel von 135° einschliessen, womit eine Varietät der möglichen Konstruktionen weiter vergrössert werden kann.

g) Rahmenelemente, ausgebildet als Rechteckrahmen mit Öffnungen, wobei benachbarte Öffnungen zueinander einen Abstand a aufweisen, und/oder welche im Wesentlichen als rechtwinklige, gleichschenklige Dreiecke ausgebildet sind, wobei bei der Hypotenuse ein Abstand zwischen benachbarten Öffnungen $\sqrt{2}$ a und bei den Katheten a beträgt.

Die Rahmenelemente sind im Wesentlichen gemäss den Stabelementen aufgebaut, und unterscheiden sich lediglich durch die rechteckige oder dreieckige Ausbildung. Bei der dreieckigen Ausbildung kann sich die Hypotenuse direkt an die letzte Öffnung einer Kathete anschliessen, wobei benachbarte Öffnungen der Katheten einen Abstand a und benachbarte Öffnungen der Hypotenuse einen Abstand $\sqrt{2}$ a aufweisen. Die dreieckige Ausführungsform umschliesst aber auch Bauarten, welche genau genommen fünfeckig ausgebildet sind, wobei das Fünfeck zwischen zwei gleichen Schenkeln einen rechten Winkel einschliesst und wobei sich an die Schenkel jeweils rechtwinklig eine Seite anschliesst, welche über die Hypotenuse miteinander verbunden sind. Diese Seiten umfassen jeweils drei Öffnungen, womit sich, insbesondere bei Ausführungsformen mit relativ langen Schenkeln im Wesentlichen die Dreiecksform ergibt. In der kleinsten Ausführungsform umfasst die Hypotenuse damit genau zwei Öffnungen, welche gleichzeitig den Seiten zuzuordnen sind. Benachbarte Öffnungen der Hypotenuse weisen einen Abstand von $\sqrt{2}$ a auf, während die übrigen Abstände a betragen. Trotz des nicht gänzlich konsistenten Ausdruckes wird zur besseren Lesbarkeit bei dieser Ausführungsform von Dreiecken und bei dem nicht in einem rechten Winkel anliegenden Bereich von einer Hypotenuse gesprochen.

Vorzugsweise weisen beide Dreiecksrahmentypen an der Hypotenusenaussenseite zwischen der endständigen Öffnung, welche jeweils auch der Kathete respektive der Seite zuzuordnen ist, und der zur endständigen Öffnung benachbarten Öffnung der Hypotenuse eine Verjüngungen auf, welche als seitliche Ausnehmung in der plattenförmigen Grundform ausgebildet ist. Die Ausnehmungen weisen vorzugsweise die Form eines Kreissegments auf. Damit werden die Bewegungsfreiheit während der Montage respektive ein Anordnungsspielraum vergrössert.

In Varianten kann die dreieckige Ausführungsform auch nicht gleichschenklig sein. Bevorzugt sind die dreieckigen Ausführungsformen aber rechtwinklig ausgebildet.

h) Werkstückträgerplatten zum Anbringen von Anlageelementen, welche als rechteckige Platten ausgebildet sind und in den Ecken Öffnungen aufweisen.

Die Öffnungen der Werkstückträgerplatte sind vorzugsweise parallel zu einer Normalen zu einer Oberfläche der Platte ausgerichtet. Die Anlageelemente umfassen dabei Maschinenelemente, welche zum Beispiel als Bestandteile einer Anlage, welche dem Fachbereich Verfahrenstechnik, Energietechnik, Versorgungstechnik, Produktionstechnik, Maschinenbau und Elektrotechnik zugehören. Die Werkstückträgerplatten können dabei eine grössere Dicke als die Stabelemente aufweisen, insbesondere wenn schwere Maschinenelemente montiert werden müssen. Anderseits kann die Werkstückträgerplatte auch leichter ausgeführt sein, insbesondere wenn sie lediglich als Abdeckung eingesetzt wird und damit keinen hohen Belastungen ausgesetzt ist. Vorzugsweise sind die Werkstückträgerplatten aus Stahl ausgebildet, wobei, zum Beispiel für Abdeckungszwecke, auch Kunststoff, Aluminium oder weitere dem Fachmann bekannte und geeignete Materialien eingesetzt werden können. Vorzugsweise wird die Werkstückträgerplatte vor Ort, insbesondere vom Verwender dem entsprechenden Anwendungszweck angepasst, wobei zum Beispiel weitere Öffnungen oder Durchbrechungen in die Adapterplatte eingearbeitet werden können.

In Varianten können die Werkstückträgerplatten auch andere Formen aufweisen, wie zum Beispiel eine Dreiecksform oder dergleichen. Die Werkstückträgerplatte muss nicht zwingend Öffnungen in den Ecken umfassen, diese können auch vor Ort durch den Verwender gebohrt, gefräst oder mittels weiteren dem Fachmann bekannten Techniken eingearbeitet werden.

i) Nutschienen, wobei Seitenwände hinterschnitten sind und in einem Nutboden im Abstand a Öffnungen angeordnet sind und Halteelemente, welche eine Platte mit Öffnungen und ein mit der Platte verschraubtes Halteteil umfassen, wobei in einem in der Nutschiene fixierten Zustand das Halteteil die hinterschnittenen Seitenwände hintergreift.

Eine Nutschiene umfasst als ein Grundelement im Wesentlichen ein Stabelement, wobei keine abgerundeten Ecken vorgesehen sind. Seitlich zum Grundelement und parallel zu einer Öffnungsachse umfasst die Nutschiene zwei parallele Seitenwände, welche beide auf derselben Seite des Grundelements angeordnet sind, womit sich im Wesentlichen ein U-förmiger Querschnitt der Nutschiene ergibt. Die Seitenwände sind an einer Innenseite so hinterschnitten, dass sich eine Nut in Längsrichtung zum Grundelement ergibt, welche rechtwinklig zu einer Öffnungsachse ausgerichtet ist. Damit ist die Nutschiene bevorzugt als sogenannte T-Nutschienen ausgebildet.

Die Nuten können von einem Halteteil, welches als Schraube oder als beliebiger Körper, welcher den Dimensionen und Abstände der Nuten entspricht, hintergriffen werden. Das Halteteil kann beispielsweise als längliches Prisma ausgebildet sein, welches eine Breite aufweist, die dem Abstand der Nuten entspricht respektive geringfügig kleiner ist. Das Prisma kann ein Innengewinde oder ein Aussengewindeteil aufweisen, welche typischerweise in die Nutschiene eingeführtem Zustand parallel zu einer Öffnungsachse ausgerichtet sind. Damit kann eine Platte, welche insbesondere als Werkstückträgerplatte, aber auch als Stabelement oder weitere Elemente ausgebildet sind, entlang der Nut stufenlos verschoben und fixiert werden. Damit wird weiter ein Gestaltungsfreiraum des Systems geschaffen. Die Platte und/oder das Halteteil können eine Führungsschiene umfassen, welche im oberen Bereich der Nutschiene, ausserhalb der Nut der Seitenwand, geführt werden kann. Damit wird eine Positionierung vereinfacht und zudem präziser erreichbar. Damit kann zum Beispiel ein Kreuztisch gebaut werden, welcher in einer xy-Ebene verfahrbar respektive positionierbar ist. Dazu können zwei erste Nutschienen parallel ausgerichtet werden. Mittels der Halteteile, insbesondere der Hülsenmutter für Nutschienen (siehe unten) kann eine Werkstückträgerplatte an die ersten Nutschienen montiert werden. Auf der Werkstückträgerplatte können anschliessend zwei zweite Nutschienen rechtwinklig zu den ersten Nutschienen montiert werden, auf welchen wiederum eine Werkstückträgerplatte montiert wird. Dem Fachmann ist jedoch klar, dass die Nutschienen für eine Vielzahl weitere Anwendungen geeignet sind. Falls ein Verbindungselement als Schraube mit einem Schraubenkopf ausgebildet ist, kann es von Vorteil sein, wenn der Schraubenkopf im Querschnitt nicht kreisförmig ausgebildet ist, sondern eine spezielle Form, wie zum Beispiel eine Parallelogrammform oder eine Kreisform mit zwei parallelen Abschnitten in Form von Kreissegmenten aufweist. Damit wird erreicht, dass der Schraubenkopf zwischen die Seitenwände hindurch in eine Öffnung der Nutschiene eingeführt und beim Verschrauben, zum Beispiel mit einer Mutter, durch die nicht kreisförmige Form ein Anschlag des Schraubenkopfs an den Seitenwänden zur Verdrehsicherung geschaffen werden kann. Die Schraubenköpfe und die Nutschiene können so dimensioniert sein, dass bei eingeführter erster Schraube mit der speziellen Form des Kopfquerschnittes eine zweite Schraube, insbesondere auch mit herkömmlichem Schraubenkopf, koaxial zur ersten Schraube, aber mit entgegen gesetzter Ausrichtung, in die Nutschiene eingeführt werden kann. Bevorzugt weisen dazu die Schraubenköpfe eine Dicke auf, welche geringfügig kleiner ist als eine halbe Nut-Breite einer Nut der Seitenwand. Damit können die erste und die zweite Schraube mühelos in obig beschriebener Art in der Nutschiene platziert werden. Insbesondere kann als Schraubverbindung die weiter unten beschriebene Hülsenmutter für Nutschienen eingesetzt werden.

Die Öffnungen sind jeweils vorzugsweise als zylinderförmige Durchbrechungen mit konstantem Durchmesser in den entsprechenden Elementen ausgebildet. Die Innenwand der Öffnungen ist bevorzugt glatt.

In Varianten können die Öffnungen auch ein Innengewinde umfassen, womit das Verbindungselement als Schraube ausgebildet sein kann. Dies hat aber den Nachteil, dass zwei mittels der Schraube zu verbindende Elemente nicht in jeder relativen Verdrehung um die Schraubenachse aneinander gepresst werden können. Dem könnte zwar dadurch abgeholfen werden, dass nur ein äusserstes der zu verbindenden Elemente ein Innengewinde aufweist, womit aber eine Konstruktion eines Gefüges kompliziert werden würde, insbesondere da die Elemente jeweils mit und ohne Gewinde bereit gestellt werden müssten. Bei zwangsläufig endständigen Elementen, wie zum Beispiel den Eckelementen, würden diese Nachteile allerdings entfallen.

Vorzugsweise sind die Öffnungen der Elemente DIN H8 toleriert. Mittels einer hohen Präzision der Öffnungen besteht die Möglichkeit, die Verbindungen entsprechend präzise auszubilden. Bevorzugt sind dazu auch die Verbindungselemente DIN h8 toleriert.

Je nach Einsatzgebiet und Baugrösse können auch grössere oder kleinere Toleranzen vorgesehen sein.

Dem Fachmann ist klar, dass das modulare System zusätzlich zu den obig unter a) bis i) beschriebenen Bauteilen auch weitere Bauteile umfassen kann. Nachfolgend sind daher weitere Bauteile beschrieben, welche zusätzlich in dem modularen System eingesetzt werden können.

Vorzugsweise umfasst das modulare System ein als Regelelement ausgebildetes Bauteil, welches zwei endständige Öffnungen aufweist, wobei ein Abstand zwischen den beiden Öffnungen stufenlos in einem vorgegebenen Bereich variierbar ist. Die Regelelemente haben den Vorteil, dass bei grösseren Gefügen Ungenauigkeiten, welche zum Beispiel durch Temperaturschwankungen auftreten können, in einfacher Weise ausgeglichen werden können (siehe dazu unten in Bezug auf das Dehnelement). Des Weiteren können damit auch Feineinstellungen vorgenommen werden (siehe dazu auch unten in Bezug auf die Reguliereinheit und die Justiereinheit).

In Varianten kann auf das Regelelement auch verzichtet werden, insbesondere wenn die zu bildenden Gefüge bezüglich der Bauteilgrösse relativ klein sind und damit in nicht relevanter Weise den durch Temperaturschwankungen verursachten Längenänderungen unterliegen.

Vorzugsweise umfasst das Regelelement zwei Elemente, welche zueinander linear verfahrbar angeordnet und mittels einer Klemmschraube relativ zueinander fixierbar sind. Damit wird eine besonders einfache Fixierung der beiden Elemente erreicht. Unter linearer Verfahrbarkeit wird auch das Einschrauben einer Stellschraube verstanden. In diesem Fall wird eine Kontaktfläche des einen Elements (Schraube) bezüglich des zweiten Elements linear verfahren. Vorzugsweise sind die beiden Elemente so geführt, dass ausschliesslich eine lineare Relativbewegung möglich ist. Dies kann zum Beispiel durch eine Schienenführung oder mittels eines Schraubgewindes erreicht werden.

Das Regelelement umfasst in einer ersten Ausführungsform als lineare Reguliereinheit ein Absatzelement, welches zum Beispiel mit einem Stabelement verbunden werden kann. Das Absatzelement hat einen ersten Bereich, welcher mindestens eine Öffnung umfasst und im Wesentlichen die Form eines Stabelements aufweist. Ein zweiter Bereich ist wiederum im Wesentlichen als Stabelement ausgebildet, weist aber eine längliche koaxial orientierte Öffnung auf. Der zweite Bereich des Absatzelements ist bezüglich der Öffnung des ersten Bereichs axial versetzt und mit ungefähr einem halben Öffnungsabstand der Stabelemente in Längsrichtung versetzt überlappend mit dem ersten Bereich verbunden. Die längliche Öffnung ist ebenfalls in Längsrichtung ausgerichtet und weist eine Länge auf, welche im Bereich einer Länge eines Stabelementes mit drei Öffnungen liegt. Das Absatzelement kann in der Anwendung mittels zweier Verbindungselemente durch die längliche Öffnung hindurch zum Beispiel mit einem Stabelement oder weiteren Bauteilen verbunden werden. Vor dem Fixieren kann nun das Absatzelement bezüglich des Stabelements in Längsrichtung stufenlos verschoben werden. Der zweite Bereich kann eine umlaufende und bezüglich der länglichen Öffnung axial orientierte Nut aufweisen, in welche eine Unterlegscheibe mit zwei Öffnungen mit Abstand a in Längsrichtung verschiebbar angeordnet sein kann. Damit wird in nicht vollständig fixiertem Zustand eine präzise, spielfreie Einstellung ermöglicht. In einer zweiten Ausführungsform als winklige Reguliereinheit ist der erste Bereich des Absatzelements im Wesentlichen als Linearstrebe ausgebildet. Vorzugsweise wird die winklige Reguliereinheit mit Linearstreben und dergleichen verbaut.

Mittels der ersten und der zweiten Ausführungsform wird eine besonders einfache Reguliereinheit geschaffen, welche insbesondere dann vorteilhaft eingesetzt werden kann, wenn die zu verbindenden Bauteile bereits eine fixe Anordnung haben, das heisst wenn der Öffnungsabstand vorbestimmt ist. In diesem Fall kann in einfacher Weise das Absatzelement über die Öffnung des ersten Bereichs mit dem einen Bauteil und das Stabelement respektive die Linearstrebe mit dem anderen Bauteil verbunden werden. Anschliessend können das Absatzelement und das Stabelement respektive die Linearstrebe verbunden werden.

In Varianten können die beiden Elemente auch zueinander verschwenkbar angeordnet sein.

Vorzugsweise ist der Abstand zwischen den Öffnungen mittels einer Stellschraube einstellbar.

Eine dritte Ausführungsform der Regelelemente, ausgebildet als lineare Justiereinheit, entspricht im Wesentlichen der linearen Reguliereinheit, wobei das Absatzelement endständig eine parallel zur Längsrichtung orientiertes Innengewinde umfasst, welches mit einer ebenfalls in Längsrichtung orientierten Schraube zusammenwirkt, welche an einem Stabelement rotierbar und axial fixiert gelagert ist. Mittels einer Drehung der Schraube kann damit das Absatzelement bezüglich des Stabelements linear justiert werden. Zur Fixierung einer Position ist vorzugsweise eine bezüglich der Öffnungen axial orientierte Schraube vorgesehen, womit das Absatzelement und das Stabelement verschraubt werden können.

Eine vierte Ausführungsform, ausgebildet als winklige Justiereinheit, unterscheidet sich von der dritten Ausführungsform lediglich darin, dass statt der Ausbildung der entsprechenden Bereiche als Stabelemente eine Ausbildung gemäss den Linearstreben vorgesehen ist.

Die dritte und die vierte Ausführungsform sind dann vorteilhaft einsetzbar, wenn der Öffnungsabstand der zu verbindenden respektive der zu justierenden Bauteile noch nicht klar definiert ist, sondern erst justiert werden soll. Dazu werden die beiden Elemente über deren Öffnungen mit den Bauteilen verbunden, worauf mittels der Stellschraube der Abstand eingestellt wird.

In Varianten kann das Absatzelement im ersten Bereich auch mehr als eine Öffnung aufweisen.

Bevorzugt umfasst das modulare System eine Einstelleinheit, welche ein Fixierelement und eine am Fixierelement drehbar gelagerte Schraube umfasst sowie zusätzlich eine Öffnung aufweist. Über die Öffnung kann die Einstelleinheit mittels eines Verbindungselements mit einem Bauteil verbunden werden. Vorzugsweise ist die Schraube rechtwinklig zur Öffnungsachse ausgerichtet. Um eine besonders kompakte Einstelleinheit zu erhalten, ist die Schraube bevorzugt tangential, zur Öffnung beabstandet angeordnet. Die Schraube kann dazu als herkömmliche Schraube mit Sechskantkopf, aber auch als im Wesentlichen eine Gewindestange mit einem Inbuskopf ausgebildet sein. Dem Fachmann sind auch weitere Schraubenvarianten bekannt, welche dazu eingesetzt werden können.

Vorzugsweise umfasst die Einstelleinheit weiter eine Fixiervorrichtung zum Fixieren der Schraube, wobei die Fixiervorrichtung insbesondere als Klemmschraube ausgebildet ist, so dass bei angezogener Klemmschraube die Schraube festklemmbar ist.

In Varianten kann auf die Fixiervorrichtung auch verzichtet werden, insbesondere wenn zum Beispiel die Schraube eine flache Gewindesteigung aufweist oder wenn die Einstelleinheit ausschliesslich zum Positionieren weiterer Bauteile vor deren Fixierung eingesetzt wird.

Bevorzugt ist die Schraube am Fixierelement drehbar und axial fest gelagert und die Einstelleinheit umfasst ein Stellelement, welches ein mit der Schraube zusammenwirkendes Innengewinde sowie einen Kontaktbereich für eine Öffnung aufweist. Das Stellelement kann mit einer Öffnung eines Bauteils zusammenwirken, so dass eine Relativposition zwischen dem Bauteil und einem weiteren Bauteil, welches über die Öffnung des Fixierelements mit dem weiteren Bauteil verbunden ist, eingestellt werden kann.

Der Kontaktbereich für eine Öffnung kann als Zapfen ausgebildet sein und wahlweise zusätzlich ein Innengewinde für eine Schraube aufweisen, womit ein Bauteil entweder lose geführt oder aber auch fixiert werden kann.

In Varianten kann auf das Stellelement auch verzichtet werden, wobei eine Einstellung lediglich mittels Kontaktierung des Bauteils über die Schraube erfolgt. In diesem Fall kann die Einstelleinheit nach erfolgter Einstellung einer Relativposition zweier Bauteile und deren Fixierung mittels der Verbindungselemente auch wieder entfernt werden.

Vorzugsweise umfasst das modulare System weiter Scharnierelemente. Damit können zum Einen Verbindungen über einen weitgehend beliebigen Winkelbereich geschaffen, zum Andern können zum Beispiel unter Verwendung der Werkstückträgerplatten auch verschwenkbare Abdeckungen konstruiert werden. Diese sind im Wesentlichen als Stabelemente aufgebaut, welches mittig eine zur Längsachse und zur Öffnungsachse orthogonale Drehachse umfasst. Die Drehachse ist vorzugsweise als Scharnier ausgebildet. Ein erster Teil des Scharnierelements kann dazu zwei parallel beabstandete und koaxial zur Drehachse angeordnete gelochte Elemente an einem Längsende eines Stabelements mit 1, 2 oder mehr Öffnungen aufweisen, wobei ein zweiter Teil an einem Längsende eines Stabelements mit 1, 2 oder mehr Öffnungen mittig ein solches Element aufweist. Die beiden Teile sind durch die Löcher mittels eines Stiftes gelenkig verbunden. Dem Fachmann sind allerdings auch andere Ausführungsformen bekannt.

Vorzugsweise umfasst das modulare System weiter Drallelemente. Ähnlich wie bei den Eckelementen kann damit eine Umlenkung um 90° geschaffen werden, wobei das Drallelement den Vorteil hat, dass es einen kleineren Raum beansprucht. Die Drallelemente sind im Wesentlichen gemäss den Stabelementen mit vorzugsweise zwei Öffnungen, wobei aber auch mehr, zum Beispiel vier möglich sind, ausgebildet, wobei die Öffnungsachsen zueinander im rechten Winkel stehen. Eine erste Öffnung liegt oberhalb einer Ebene, in welcher die zweite Öffnung liegt.

Vorzugsweise umfasst das modulare System weiter Gelenkelemente. Die Gelenkelemente können modular zusammengebaut werden, womit sie für jegliche Verwendungen angepasst werden können. Die Gelenkelemente können verschiedene Grundformen aufweisen. Ein Gelenkelement umfasst zum Beispiel ein Winkelstück, welches zwei rechtwinklig zueinanderstehende Bereiche aufweist und wobei ein erster Bereich eine Öffnung und ein zweiter Bereich eine nach aussen ragende Hülse mit einem Innengewinde umfasst. Als Innenseite des Winkelstücks wird nachfolgend der durch die beiden Seiten in rechtem Winkel eingeschlossene Bereich verstanden. Die Hülse weist einen Aussendurchmesser auf, welcher im Wesentlichen dem Innendurchmesser einer Öffnung, zum Beispiel eines Stabelements, entspricht. Damit können, je nach Länge der Hülse, ein bis zwei Bauteile mittels einer geeigneten Schraube an das Winkelstück geschraubt werden, wobei die Schraube bevorzugt als eine unten beschriebene Hutschraube ausgebildet ist. Das Gelenkelement umfasst weiter ein im Wesentlichen als Verdrehelement ausgebildetes Teil, an welches beidseitig über eine Öffnung ein Winkelstück so angeschraubt werden kann, dass die Innengewindeachsen der beiden Winkelstücke in einer Ebene liegen, womit ein Kreuzgelenk gebildet wird. Das Teil umfasst vorzugsweise zwei Öffnungen, wobei die beiden Öffnungsachsen in derselben Ebene liegen. Damit kann das Kreuzgelenk doppelt ausgeführt werden, in dem über die beiden Öffnungen jeweils zwei Winkelstücke verschraubt werden. Statt der zweiten Öffnung kann das Teil auch eine rechtwinklig zur Öffnungsachse orientierte Hülse mit Innengewinde oder einen zum anschweissen an ein weiteres Bauteil geeigneter Bereich aufweisen. Schliesslich kann das Teil auch im Wesentlichen als Distanzhülse ausgebildet sein.

Vorzugsweise umfasst das modulare System weiter Spinnenelemente. Die Spinnenelemente sind im Wesentlichen gemäss den Stabelementen aufgebaut und können in grosser Variation vorliegen. Ausgehend von einem Stabelement mit drei Reihen und drei Zeilen an Öffnungen, welches selbst schon als Spinnenelement definiert ist, können nun beliebige zusammenhängende Bereiche mit Öffnungen weggelassen werden, womit eine erste Klasse an Spinnenelementen erreicht wird. Damit wird zum Beispiel ein rechtwinkliges Spinnenelement mit 5 Öffnungen oder ein sternförmiges Spinnenelement mit 5 Öffnungen erreicht. Weiter umfassen die Spinnenelemente aber auch zum Beispiel ein Element mit drei in einem regelmässigen Dreieck angeordneten Öffnungen oder ein im Wesentlichen als Stabelement ausgebildetes Absatzelement, welches zwischen zwei Öffnungen einen Absatz der Dicke des Stabelements aufweist. Letzteres kann beispielsweise verwendet werden, um mittels zwei Stabelementen und einem Absatzelement ein stabiles Dreieck zu bilden, welches keine Spannungen aufweist.

Vorzugsweise umfasst das modulare System weiter Winkelelemente. Die Winkelelemente ermöglichen eine Richtungsänderung bei der Verbindung zweier Bauteile, zum Beispiel zweier Stabelemente, um einen Winkel von 45° oder 90°. Die Winkelelemente umfassen vorzugsweise zwischen zwei und vier Öffnungen und können im Wesentlichen als einen Winkel aufweisende Stabelemente oder Spinnenelemente ausgebildet sein. Zwei Öffnungsachsen eines Winkelelements weisen dazu einen Winkel von 45° oder 90° auf. Durch den Winkel werden zwei zueinander angrenzende Teile definiert, welche jeweils mindestens eine Öffnung umfassen. Diese Teile können, falls mehr als eine Öffnung vorgesehen ist, mit der Öffnungsreihe bezüglich einer zum Winkel orthogonalen Achse parallel oder rechtwinklig verlaufen. Ein Teil kann auch selbst wiederum mit einem eine Öffnung aufweisenden Zusatzteil zum Beispiel so verbunden sein, dass die Öffnungsachse des Zusatzteils zu einer Öffnungsachse des Teils rechtwinklig angeordnet ist.

In Varianten können die Winkel auch beliebige andere Beträge aufweisen. Die Winkelemente müssen nicht zwingend auf zwei bis vier Öffnungen beschränkt sein.

Vorzugsweise umfasst das modulare System weiter U-Elemente. Damit wird eine bezüglich der Öffnungen der Bauteile eine axiale Versetzung eines nächsten Bauteils ermöglicht. Die U-Elemente sind im Wesentlichen gemäss den Stabelementen ausgebildet, wobei die beiden endständigen Öffnungen im rechten Winkel auf dieselbe Seite abgebogen sind. Die U-Elemente umfassen typischerweise gesamthaft drei oder vier Öffnungen, wobei aber auch mehr als vier Öffnungen vorgesehen sein können. Unter U-Elemente fallen weiter im Wesentlichen quaderförmige Elemente, bei welchen zwei angrenzende Seitenflächen fehlen und wobei jede Seitenfläche mindestens eine Öffnung umfasst.

Vorzugsweise umfasst das modulare System weiter Boxelemente. Diese können in vielfältiger Weise eingesetzt werden, insbesondere kann damit ein Orthogonalsystem für ein Gefüge definiert werden. Die Boxelemente sind quaderförmig ausgebildet, wobei eine oder beide Deckflächen fehlen, so dass ein Verbindungselement von beiden Seiten in eine Öffnung geführt werden kann. Die ersten Seitenflächen umfassen ein bis zwei Reihen à ein bis drei Öffnungen. Die zweiten Seitenflächen umfassen entsprechend ein bis zwei Reihen mit einer Öffnung, womit die Deckfläche eine Reihe à ein bis drei Öffnungen umfasst.

Die Boxelemente sind nicht zwingend auf die obig beschriebenen einzuschränken, sondern können auch anderweitig ausgeführt sein. Zum Beispiel kann die Deckfläche auch mehr als eine Reihe an Öffnungen aufweisen. Es ist auch denkbar, ein Boxelement zu bilden, welches zwei Deckflächen umfasst, insbesondere wenn die Öffnungen beispielsweise ein Innengewinde umfassen.

Vorzugsweise umfasst das modulare System weiter Stützelemente. Damit kann ein Gefüge am Boden befestigt werden. Die Stützelemente umfassen dazu einen plattenförmigen Bereich mit Löchern, welche als Öffnungen ausgebildet sein können, der zur Befestigung am Boden vorgesehen ist. Dieser Bereich kann beliebig geformt sein. Weiter kann das Stützelement einen mit dem Bereich zur Befestigung am Boden rechtwinklig verbundenen Verbindungsbereich für das Gefüge umfassen, welcher zum Beispiel die Form eines Stabelements oder eines Winkelelements mit ein bis drei Öffnungen, oder eines T-förmigen Elements mit drei Öffnungen aufweisen kann.

Die Stützelemente können auch als oberen Abschluss für die Montage einer Werkstückträgerplatte oder dergleichen eingesetzt werden.

Vorzugsweise umfasst das modulare System weiter Prismamodule. Damit können Rohrleitungen oder sonstige stangenähnlich ausgebildete Elemente gehalten werden. Die Prismamodule umfassen zwei parallele miteinander befestigte plattenförmige Elemente, welche im Wesentlichen rechteckig ausgebildet sind und einen V-förmigen Ausschnitt aufweisen, in welchen die stangenähnlichen Elemente eingelegt werden können. Die plattenförmigen Elemente weisen mehrere Öffnungen auf, über welche diese mit weiteren Bauteilen verbunden werden können. Zwischen den beiden plattenförmigen Elementen ist ein Bügel befestigt. Der Bügel umfasst ein V-förmiges Element mit randständig angeordneten Flanschen mit gewindelosen Bohrungen und ein stabförmiges Element, welches randseitig jeweils eine Bohrung mit Innengewinde aufweist. Das stangenförmige Element ist zwischen den plattenförmigen Elementen befestigt und das V-förmige Element wird über Schrauben mit dem plattenförmigen Element verbunden, so dass sich durch die V-förmigen Ausschnitte des plattenförmigen Elements und dem V-förmigen Element ein im Wesentlichen quadratischer oder rhombusförmiger Zwischenraum zur Aufnahme des stangenähnlichen Elements bildet. Je nach Einstellung der Schrauben können damit stangenähnliche Elemente unterschiedlicher Durchmesser und Formen gehalten werden.

Vorzugsweise umfasst das modulare System weiter Keilflansche. Damit können V-förmige Strukturen für das Gefüge geschaffen werden. Die Keilflansche weisen im Wesentlichen eine prismatische Form mit einem kreissegmentförmigen Querschnitt auf. Der Innenwinkel des Kreissegments kann dabei beliebig ausgebildet sein. An den Seitenflächen, welche rechtwinklig zur Querschnittsfläche angeordnet sind, umfasst der Keilflansch mehrere Hülsen, welche ein Innengewinde aufweisen und so dimensioniert sind, dass sie in eine Öffnung eines Bauteils, zum Beispiel eines Boxelements, geführt werden können. Anschliessend kann eine Schraube, insbesondere eine unten definierte Hutschraube, in das Innengewinde der Hülse geschraubt werden. Vorzugsweise umfasst ein Keilflansch beidseitig eine radial oder axial zum Prisma ausgerichtete, seitlich angeordnete Reihe an zwei Hülsen. Schraube und Hülse können gemäss nachfolgender Beschreibung ausgebildet sein.

Vorzugsweise ist das Verbindungselement als Schraubverbindung ausgebildet, mit einem ersten Element, umfassend ein Aussengewinde und einen ersten Kopfteil, sowie einem zweiten Element, umfassend ein Innengewinde und einen zweiten Kopfteil, wobei beim in das zweite Element vollständig eingeschraubten ersten Element eine Oberfläche zwischen dem ersten Kopfteil und dem zweiten Kopfteil als glatter Kreiszylinder ausgebildet ist, welcher insbesondere zur Verstiftung geeignet ist.

Damit wird eine Schraubverbindung geschaffen, welche sowohl axiale Kräfte durch die Verschraubung, wie auch radiale Kräfte durch die Verstiftung, das heisst, über den als glatter Kreiszylinder ausgebildeten Bereich, aufnehmen kann. Die Stiftwirkung bedingt allerdings, dass die Aufnahmen der zu verschraubenden Bauteile einen zum Kreiszylinder entsprechenden Durchmesser aufweisen. Dies ist insbesondere bei Konstruktionen von Vorteil, welche eine hohe Präzision fordern. Gegenüber den herkömmlichen Verschraubungen besteht der Vorteil, dass der Gewindeteil nicht in Kontakt mit den zu verschraubenden Elementen steht, womit die Gefahr einer Verletzung des Gewindeteils im Kontaktbereich mit den zu verschraubenden Elementen verringert werden kann. Weiter kann dadurch die Verschraubung als solche kompakter ausgebildet sein. Der Gewindeteil des ersten Elements und des zweiten Elements kann damit eine grössere axiale Länge aufweisen, womit radiale und insbesondere auch axiale Kräfte besser aufgenommen werden können. Bei der Verwendung kann bereits nach dem Einführen des zweiten Elements mit dem Innengewinde in die Aufnahmen der zu verbindenden Bauteile eine Verstiftung erreicht werden, insbesondere bevor das erste Element eingeschraubt ist. Damit wird der Aufbau eines Gefüges vereinfacht, da durch die verstiftende Wirkung des zweiten Elements bereits vor der Verschraubung die radialen Kräfte aufgenommen werden können und damit die radiale Position, insbesondere die radiale Präzision bereits gegeben ist. Vorzugsweise ist das Innengewinde des zweiten Elements koaxial zum und innerhalb des glatten Kreiszylinders angeordnet.

In Varianten können die Bauteile über deren Öffnungen untereinander auch Vernietet werden. Dem Fachmann sind auch weitere Verbindungstechniken bekannt, welche den Anforderungen im Maschinen-, Sondermaschinen- und Anlagenbau genügen.

Vorzugsweise ist das erste Element mit dem zweiten Element in axial mindestens zwei Positionen verschraubbar, wobei der Abstand zwischen dem ersten und dem zweiten Kopfteil in der ersten axialen Position grösser ist als in der zweiten axialen Position. Damit können in der ersten Position zum Beispiel drei Bauteile, wie etwa drei Stabelemente, derselben Dicken und in der zweiten axialen Position zwei solche Stabelemente verschraubt werden. In der ersten axialen Position können auch mehr als drei und in der zweiten axialen Position mehr als zwei Bauteile verschraubt werden. Insbesondere kann die Verschraubung auch in mehr als zwei axialen Positionen erfolgen, typischerweise kann der Abstand zwischen den Kopfteilen stetig zwischen dem maximalen und dem minimalen Abstand variiert werden. Besonders in der ersten axialen Position muss die Oberfläche zwischen dem ersten und dem zweiten Kopfteil nicht zwingend vollständig als glatter Kreiszylinder ausgebildet sein. Bereichsweise kann auch das Aussengewinde oder ein sich an das Aussengewinde anschliessender Teil, welcher zwischen dem Kopfteil und dem Gewindeteil liegt, des ersten Elements noch aus dem glatten Kreiszylinder hervorragen und in diesem Bereich einen geringeren Durchmesser aufweisen als der Kreiszylinder. In diesem Bereich ist das Bauteil radial nicht gestützt. Dies ist insbesondere dann unproblematisch, wenn das in diesem Bereich zu liegen kommende Bauteil zumindest teilweise durch den glatten Kreiszylinder radial gehalten ist. Vorzugsweise weist dieser Bereich bezüglich des Bauteils eine axiale Länge von höchstens ungefähr einem Drittel der axialen Länge der Aufnahme des Bauteils auf, so dass das Bauteil dennoch hinreichend radial gehalten und die Verstiftung gewährleistet ist.

Das Aussengewinde des ersten Elements und das Innengewinde des zweiten Elements sind vorzugsweise nicht konisch ausgebildet, um die beiden axialen Positionen ermöglichen zu können.

Vorzugsweise ist das erste Element als Hutschraube ausgebildet. Der Kopfteil des ersten Elements ist damit als Hut der Hutschraube ausgebildet. Damit können die in die entsprechende axiale Richtung ausgeübten Kräfte über den Hut der Hutschraube aufgenommen werden. Der Hut weist einen Kontaktbereich für ein Drehmomentwerkzeug auf, so dass über den Hut der Hutschraube die Schraubverbindung angezogen werden kann (siehe weiter unten).

In Varianten kann die das erste Element auch anderweitig ausgebildet sein, wobei vorzugsweise der Kopfteil einen radial grösseren Querschnitt aufweist als der Gewindeteil.

Vorzugsweise umfasst der Aussengewindeteil eine zum ersten Kopfteil benachbarte umlaufende Nut. Damit kann in der zweiten axialen Position ein Teil des glatten Kreiszylinders in der Nut aufgenommen werden. Weiter wird dadurch ermöglicht, dass in beiden axialen Positionen die Bauteile ohne zusätzliche Elemente zwischen den Kopfteilen axial gehalten werden können, während die Verstiftung gewährleistet bleibt. Die Nut weist dazu einen Aussendurchmesser auf, welcher im Wesentlichen, insbesondere in Abhängigkeit der zulässigen Längentoleranz der Durchmesser, dem Aussendurchmesser des glatten Kreiszylinders entspricht. Der Innendurchmesser entspricht in etwa dem Aussendurchmesser des Aussengewindes des ersten Elements. Damit wird gewährleistet, dass das Innengewinde in die Nut hineingeschraubt werden kann.

Die Nut weist in einem Querschnitt eine U-Form auf, wobei die Öffnung in axialer Richtung, insbesondere in Richtung des Gewindes orientiert ist.

In Varianten kann auch auf die umlaufende Nut verzichtet werden. In diesem Fall könnten Unterlegscheiben oder Distanzhülsen die axiale Fixierung der Bauteile gewährleisten.

Vorzugsweise ist das zweite Element als Hülsenmutter ausgebildet, wobei die Hülse als glatter Kreiszylinder ausgebildet ist, welcher insbesondere zur Verstiftung geeignet ist, und ein Innengewinde aufweist. Das Innengewinde ist vorzugsweise koaxial zur Hülse ausgebildet. Der Kopfteil weist bevorzugt einen grösseren Durchmesser auf, als die Hülse, so dass dieser auch zum axialen Fixieren der Bauteile dienen kann. Der Kopfteil kann als Hülsenmutterkopf, ähnlich einem Schraubenkopf, oder als radial nach aussen ragender Rand der Hülse ausgebildet sein. Der Hülsenmutterkopf kann einen Innensechskant aufweisen. Weiter kann das Innengewinde auch durch den Hülsenmutterkopf hindurchgeführt sein, wobei die Aussenkontur des Hülsenmutterkopfs eine Form aufweist, über welche ein Werkzeug zur Verdrehsicherung während dem Verschrauben angreifen kann. Diese Aussenkontur kann beispielsweise als Polygon, insbesondere achteckig oder sechseckig ausgebildet sein. An einem dem Hülsenmutterkopf gegenüberliegenden Ende kann ein Freistich, das heisst, ein gewindefreier Bereich vorgesehen sein. Das Innengewinde kann auch in einem Sackloch ausgebildet sein, wobei der Hülsenmutterkopf damit keine Öffnung aufweist, welche mit dem Innengewinde kommuniziert. Eine solche Ausbildung kann insbesondere in der chemischen und/oder der pharmazeutischen Industrie von Vorteil sein, da von der Hülsenmutterkopf-Seite her keine Verschmutzung in den Bereich des Innengewindes eindringen kann.

In einer bevorzugten Ausführungsform weist der Durchmesser des glatten Kreiszylinders 6.5mm oder 10.5mm auf und weisen eine H-Toleranz von vorzugsweise 7 oder 8 auf. Der Abstand zwischen den Kopfteilen in der zweiten axialen Position kann zum Beispiel in der ersten, kürzeren Ausführungsform der Hülsenmutter 6 mm respektive 10 mm und in der zweiten, längeren Ausführungsform der Hülsenmutter 12 respektive 20 mm betragen. Es versteht sich, dass sämtliche Massangaben beliebig variiert werden können.

Die Hutschraube muss nicht zwingend eine Nut umfassen, sondern kann auch im Wesentlichen als herkömmliche Schraube ausgebildet sein. Falls die Hutschraube keine Nut umfasst, können die Hülsenmuttern in entsprechend mehreren unterschiedlichen Längen vorliegen. Die Bauteile können grundsätzlich auch anderweitig miteinander verbunden werden. Dem Fachmann sind dazu auch weitere Möglichkeiten bekannt, insbesondere können auch herkömmliche Verschraubungs-, Verstiftungs- oder Vernietungstechniken eingesetzt werden.

Bevorzugt umfasst das Verschraubungssystem weiter Stufenstifte, welche aus zwei koaxialen und axial hintereinander angeordneten Bereichen bestehen, wobei ein erster Bereich einen ersten Aussendurchmesser und einen ersten Innendurchmesser, sowie in einem zweiten Bereich einen zweiten Aussendurchmesser und einen zweiten Innendurchmesser aufweist, wobei insbesondere die beiden Innendurchmesser respektive Aussendurchmesser auch identisch sein können. Vorzugsweise umfassen die beiden Bereiche entsprechend unterschiedliche Innengewinde. Die Innengewinde können so ausgebildet sein, dass Bauteile der grossen Baugrösse mit Bauteilen der kleinen Baugrösse verbunden werden können. Die Innengewinde können aber auch andere, insbesondere herkömmliche Innengewinde umfassen.

Aus der nachfolgenden Detailbeschreibung und der Gesamtheit der Patentansprüche ergeben sich weitere vorteilhafte Ausführungsformen und Merkmalskombinationen der Erfindung.

**Kurze Beschreibung der Zeichnungen**

Die zur Erläuterung des Ausführungsbeispiels verwendeten Zeichnungen zeigen jeweils Schrägansichten von:

Fig. 1      Bauteile aus den Klassen der Stab- und Schieberelemente;

Fig. 2      Bauteile aus den Klassen der Linearstreben, Winkelstreben, Z- und C-Streben;

Fig. 3      Bauteile aus den Klassen der Regulier- und Justiereinheiten;

Fig. 4      Bauteile aus den Klassen der Scharnier-, Verdreh-, Gelenk- und Spinnenelemente;

Fig. 5      Bauteile aus den Klassen der Winkelelemente, der U-Elemente sowie der Boxelemente;

| | |
|---|---|
| Fig. 6 | Bauteile aus den Klassen der Eck-, Stützelemente; |
| Fig. 7 | Bauteile aus den Klassen der Rahmen; |
| Fig. 8 | Bauteile aus der Klasse der Werkstückträgerplatten; |
| Fig. 9 | Bauteile aus der Klasse der Nutschienen; |
| Fig. 10 | Bauteile aus den Klassen der Nachstelleinheiten; |
| Fig. 11 | Bauteile aus der Klasse der Halterungen und Adapter; |
| Fig. 12 | Bauteile aus den Klassen der Prismamodule und der Keilflansche; |
| Fig. 13 | einer Anwendung mit Prismamodulen; |
| Fig. 14 | einem Gefüge, hergestellt aus einer Kombination von Elementen verschiedener Klassen; |
| Fig. 15 | einem aus Elementen verschiedener Klassen aufgebautem Kreuztisch; |
| Fig. 16a | eine Schnittdarstellung entlang einer Längsachse einer Hutschraube der ersten Ausführungsform; |
| Fig. 16b | eine schematische Draufsicht auf den Kopfteil der Hutschraube gemäss Figur 16a; |
| Fig. 17a | eine Schnittdarstellung entlang einer Längsachse einer kurzen Hülsenmutter der ersten Ausführungsform; |
| Fig. 17b | eine schematische Draufsicht auf den Hut der Hülsenmutter gemäss Figur 17a; |
| Fig. 18a | eine Schnittdarstellung entlang einer Längsachse durch eine Schraubverbindung der ersten Ausführungsform mit einer kurzen Hülsenmutter in der zweiten axialen Position, wobei zwei Bauteile verschraubt sind; |
| Fig. 18b | eine Schnittdarstellung entlang einer Längsachse durch eine Schraubverbindung der ersten Ausführungsform mit einer kurzen Hülsenmutter in der ersten axialen Position, wobei drei Bauteile verschraubt sind; |
| Fig. 19a | eine Schnittdarstellung entlang einer Längsachse durch eine Schraubverbindung der ersten Ausführungsform mit einer langen Hülsenmutter in der zweiten axialen Position, wobei vier Bauteile verschraubt sind; und |
| Fig. 19b | eine Schnittdarstellung entlang einer Längsachse durch eine Schraubverbindung der ersten Ausführungsform mit einer langen Hülsenmutter der zweiten Ausführungsform in der ersten axialen Position, wobei fünf Bauteile verschraubt sind; |
| Fig. 20a | eine Schnittdarstellung entlang einer Längsachse einer Hutschraube der zweiten Ausführungsform; |
| Fig. 20b | eine schematische Draufsicht auf den Kopfteil der Hutschraube gemäss Figur 20a; |
| Fig. 21a | eine Schnittdarstellung entlang einer Längsachse einer kurzen Hülsenmutter der zweiten Ausführungsform; |
| Fig. 21b | eine schematische Draufsicht auf den Hut der Hülsenmutter gemäss Figur 21a; |
| Fig. 22a | eine Schnittdarstellung entlang einer Längsachse durch eine Schraubverbindung der zweiten Ausführungsform mit einer kurzen Hülsenmutter in der zweiten axialen Position, wobei zwei Bauteile verschraubt sind; |
| Fig. 22b | eine Schnittdarstellung entlang einer Längsachse durch eine Schraubverbindung der zweiten Ausführungsform mit einer kurzen Hülsenmutter in der ersten axialen Position, wobei drei Bauteile verschraubt sind; |
| Fig. 23a | eine Schnittdarstellung entlang einer Längsachse durch eine Schraubverbindung der zweiten Ausführungsform mit einer langen Hülsenmutter in der zweiten axialen Position, wobei vier Bauteile verschraubt sind; und |
| Fig. 23b | eine Schnittdarstellung entlang einer Längsachse durch eine Schraubverbindung der zweiten Ausführungsform mit einer langen Hülsenmutter in der ersten axialen Position, wobei fünf Bauteile verschraubt sind. |
| Fig. 20 | eine Draufsicht und eine Schnittdarstellung entlang einer Längsachse durch eine lange und eine kurze Hülsenmutter für Nutschienen; |
| Fig. 21 | eine Distanzscheibe; |
| Fig. 22 | Schrägansichten dreier Ausführungsformen von Stufenstiften. |

Grundsätzlich sind in den Figuren gleiche Teile mit gleichen Bezugszeichen versehen.

**Wege zur Ausführung der Erfindung**

Nachfolgend sind anhand der Figuren Beispiele von Bauteilen der leichten Ausführungsform beschrieben. Soweit nicht anderweitig festgehalten sind die Bauteile aus Stahlplatten mit einer Dicke von 3 mm ausgebildet. Die Öffnungsdurchmesser betragen jeweils 6.5 mm. Der Begriff "gebogen" ist nicht zwangsläufig als Herstellungsmethode zu verstehen. Unter Abstand in Bezug auf zwei Öffnungen wird im Folgenden ein Achsenabstand der Öffnungsachsen zweier benachbarten Öffnungen verstanden. Die im Laufenden verwendeten ersten, zweiten und dritten Raumrichtungen bilden ein Orthogonalsystem.

Die Begriffswahl der einzelnen Bauteile stellt keine Einschränkung für deren Verwendung dar. Dem Fachmann ist jeweils klar, dass dem Einsatz der Bauteile keine Grenze gesetzt ist. So müssen zum Beispiel nachfolgend beschriebene Linearstreben nicht ausschliesslich als Streben in einem Gefüge eingesetzt werden.

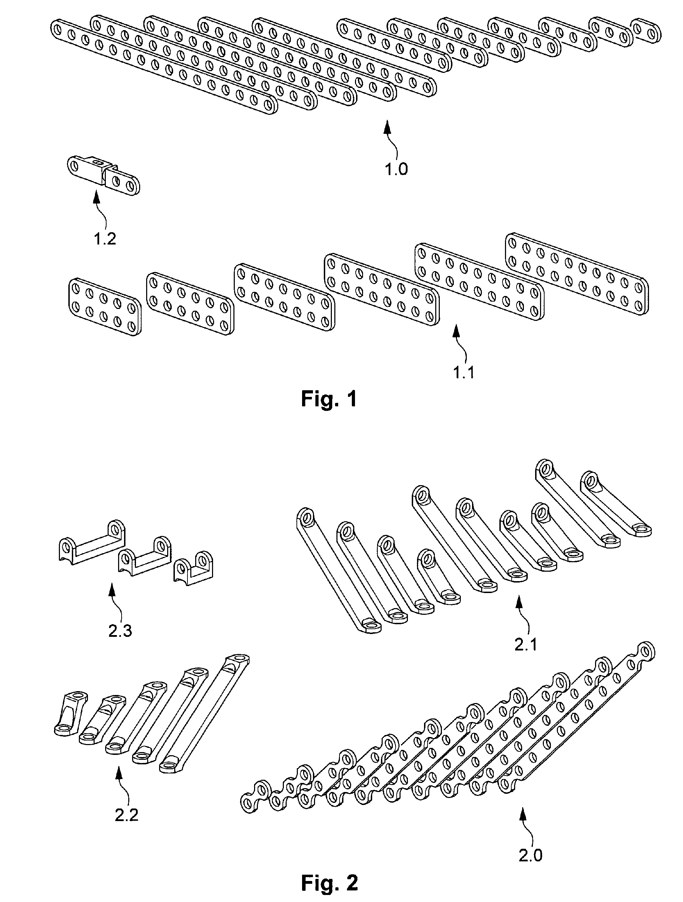

Die Figur 1 stellt Ausführungsbeispiele von Elementen aus den Klassen 1.0 "Stabelemente einreihig", 1.1 "Stabelemente doppelreihig" und 1.2 "Schieberelemente" dar.

Ein erstes im Wesentlichen quaderförmiges einreihiges Stabelement 1.0 besteht dabei aus einer länglichen Leiste aus Stahl der ungefähren Länge 25mm in einer zweiten Raumrichtung, mit zwei parallelen Seiten der ungefähren Breite 12,5mm in zweiter und in einer dritten Raumrichtung, zwei parallelen und rechtwinklig zu den Seiten liegenden Flächen der Breite 3mm und Länge 25mm in einer ersten und in zweiter Raumrichtung, zwei rechtwinklig zu den Seiten und sich den Flächen anschliessenden Stirnflächen, sowie zwei in erster Raumrichtung und in der Mitte zwischen den beiden Flächen angebrachten Öffnungen, die einen Standarddurchmesser von 6.5mm und einen gegenseitigen Standardrandabstand von 6mm haben (wodurch sich ein Lochabstand von 12.5mm ergibt). Gegenüberliegende Enden der Leiste sind halbkreisförmig ausgearbeitet, wobei das Zentrum dieses Halbkreises mit dem Zentrum der an besagtem Ende angebrachten Öffnung zusammenfällt und der Radienunterschied ungefähr 3mm beträgt. In der Figur sind weitere ausführungsgemässe Stabelemente grösserer Länge dargestellt, die zwischen drei und siebzehn Öffnungen enthalten, deren Konstruktionsweise aber analog derjenigen des Stabelements 1.0 mit zwei Öffnungen ist und deren Öffnungen alle auf einer Linie parallel und mittig zu den Flächen liegen.

In der Figur 1 ebenfalls dargestellt sind Stabelemente aus der Klasse 1.1 "Stabelemente doppelreihig", die aus Platten mit zwei parallelen Seiten der ungefähren Breite 25mm in dritter Raumrichtung und zwei parallelen, zu den Seiten rechtwinkligen Flächen der Breite 3mm in erster und zweiter Raumrichtung bestehen, welche eine in erster Raumrichtung liegende Wandstärke des Elements definieren, sowie auf den Seiten zwei nebeneinander liegende Reihen von Öffnungen (in den abgebildeten Ausführungen zwischen vier und elf Stück), distanziert in dritter Raumrichtung wiederum um den Standardrandabstand von 6mm, besitzen. Diese beiden Reihen von Öffnungen sind analog den Reihen von Öffnungen der Elemente der Klasse 1.0 "Stabelemente einfach" ausgebildet und so parallel zu einander angeordnet, dass die Zentren nebeneinander liegender Löcher der beiden Reihen auf einer Verbindungslinie liegen, welche senkrecht zur Verbindungslinie der Zentren der Öffnungen einer Reihe steht und einen gegenseitigen Randabstand von 6mm hat. Die Bauweise dieser Elemente ist ansonsten analog den Elementen der Klasse 1.0 "Stabelemente einfach". Elemente dieser Klasse 1.1 besitzen an den Enden durch einen Viertelkreis abgerundete Ecken der Seiten, wobei das Zentrum dieser Rundung mit dem Zentrum der nahe dieser Ecke liegenden Öffnung zusammenfällt und der Radienunterschied 3mm beträgt.

Weiter ist in der Figur 1 auch ein Element der Klasse 1.2 "Schieberelemente" dargestellt. Dieses besteht aus zwei Teilen, die gegeneinander parallelverschiebbar sind. Beide Teile weisen die Grundform eines einreihigen Stabelements 1.0 auf, wobei das erste Teil eine Öffnung und das zweite Teil zwei Öffnungen umfasst. Das erste Teil umfasst weiter auf der Oberfläche eine Führungshülse, welche eine Führungsöffnung mit einer Achse aufweist, wobei die Achse die Öffnungsachse senkrecht schneidet. Die Führungshülse weist eine in Längsrichtung orientierte Führungsnut auf. Das zweite Teil weist einen der Führungshülse entsprechenden Bolzen auf, welcher eine Längsachse aufweist, die senkrecht zu den Öffnungsachsen steht. Der Bolzen ist in der Führungshülse geführt und seitlich mittels eines Stifts, welcher in der Führungsnut geführt ist, radial gesichert. Die Führungsnut fungiert weiter als axiale Begrenzung für die Relativbewegung der beiden Teile.

Die Figur 2 stellt Ausführungsbeispiele aus den Klassen 2.0 "Linearstreben", 2.1 "Winkelstreben", 2.2 "Z-Streben" und 2.3 "C-Streben" dar. Eine abgebildete Linearstrebe 2.0 besteht, wie die Elemente der Klasse 1.0 "Stabelemente einfach", aus einer länglichen Leiste derselben Seiten- und Flächenbreite mit fünf analog den Elementen der Klasse 1.0 "Stabelemente einfach" angebrachten Öffnungen. Jeweils zwei benachbarte Öffnungen besitzen allerdings einen um einen Faktor $\sqrt{2}$ gegenüber demjenigen der Stabelemente vergrösserten Lochabstand, wodurch eine diagonale Verbindung zwischen zwei Öffnungen von rechtwinklig aufeinander stehenden und in derselben Ebene liegenden Stabelementen der Klassen 1.0 oder 1.1 möglich wird, wobei die Seiten der Linearstrebe in derselben Ebene wie die Seiten der beiden Stabelemente liegen und mit jedem der beiden Stabelemente einen Winkel von 45° einschliessen. Ein weiterer Unterschied zu den genannten Elementen der Klasse 1.0 besteht in zwei zwischen den jeweils letzten beiden Öffnungen eines Endes an den beiden Flächen, rechtwinklig zu den Seiten, symmetrisch angebrachten halbkreisförmigen Ausnehmungen in der Seitenbreite. Eine solche Ausnehmung besitzt einen Durchmesser von ungefähr Seitenbreite/√2mm und die beiden Ausnehmungen sind so angebracht, dass die verbleibende minimale Seitenbreite ungefähr dem Öffnungsdurchmesser entspricht. Besitzt eine Linearstrebe 2.0 nur zwei Öffnungen, so sind zwei analoge Ausnehmungen zwischen diesen beiden Öffnungen angebracht.

Ebenfalls in Figur 2 abgebildet sind Elemente der Klasse 2.1 "Winkelstreben", welche aus zwei, das jeweilige Ende bildenden, rechtwinklig aufeinander stehenden, Endplatten sowie einer dazwischen angebrachten länglichen Leiste bestehen. Diese Endplatten weisen eine ungefähre Seitenlänge von 12.5mm und eine Wandstärke von 3mm auf, die auf den Seiten eine zentriert angebrachte Öffnung mit Standarddurchmesser besitzt und deren Ende analog den Elementen der Klasse 1.0 "Stabelemente einfach" (siehe Figur 1) abgerundet ist. Zwei solche Endplatten stehen mit ihren Seiten senkrecht zueinander und sind so angeordnet, dass die zwischen den beiden nicht abgerundeten Ecken liegenden Flächen der beiden Platten ebenfalls rechtwinklig auf einander stehen und einander benachbart sind. Besagte zwei Flächen sind durch eine längliche Leiste in analoger Dimension der Leisten der Elemente der Klasse 1.0 "Stabelemente einfach", jedoch ohne Öffnungen, in entsprechender Länge verbunden, sodass die Distanz sowohl in einer ersten wie auch in einer dritten Raumrichtung zwischen den zu verbindenden Öffnungen zwischen einer und vier Öffnungen betragen können, was zu den dargestellten Ausführungsbeispielen führt. Die Summe der Winkel zwischen den Endplatten und der länglichen Leiste beträgt jeweils 270°. Damit können zum Beispiel beide Winkel 135°, oder ein erster Winkel 110° und ein zweiter Winkel 160° etc. betragen. Diese längliche Leiste besitzt an ihren beiden Enden halbkreisförmige Aussparungen, deren Zentrum mit dem Mittelpunkt der Öffnung der jeweiligen Endplatte zusammenfällt und die um die Öffnung herum einen Rand von ungefähr 3mm Breite zur Aufnahme eines Schraubenkopfes aussparen.

Weiter in Figur 2 aufgezeichnet sind Elemente der Klasse 2.2 "Z-Streben", die im Wesentlichen analog den Elementen der Klasse 2.1 "Winkelstreben" konstruiert sind, deren Endplatten aber mit ihren Seiten (und damit die Achsen der Öffnungen) parallel zueinander liegen und deren Distanz in einer ersten und einer dritten Raumrichtung der zu verbindenden Öffnungen jeweils gleich gross ist. Der Achsenabstand der Öffnungen der Endplatten entspricht dabei einem Vielfachen eines Öffnungsabstands eines Stabelements.

Auch in der Figur 2 dargestellt sind Elemente der Klasse 2.3 "C-Streben". Diese besitzen wie die Elemente der Klasse 2.2 "Z-Streben" zwei parallele und analog ausgebildete Endplatten in einer ersten und zweiten Raumrichtung liegend, deren Öffnungen aber bei diesen Elementen koaxial zueinander angeordnet sind. Verbunden sind diese beiden Endplatten durch eine rechtwinklig auf beide Endplatten angebrachte, in einer dritten Raumrichtung länglichen Leiste mit U-förmigem Querschnitt, wobei sich ein Inneres dieser U-förmigen Leiste auf der den Öffnungen der Endplatten abgewandten Seite der Leiste befindet.

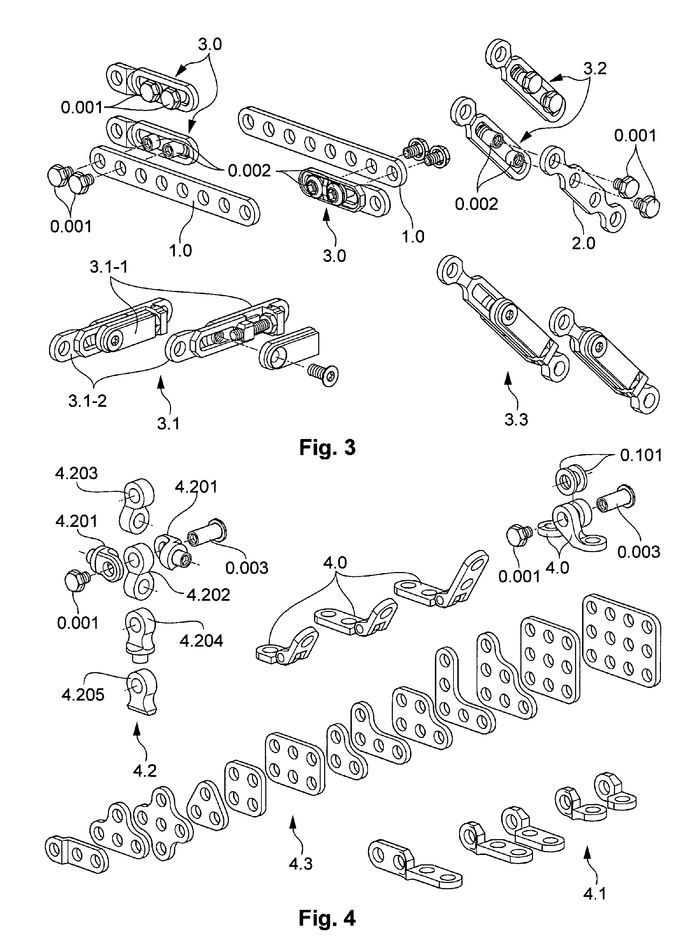

Die Figur 3 stellt Ausführungsbeispiele der leichten Ausführungsform von Elementen der Klassen 3.0 "Reguliereinheit linear", 3.1 "Justiereinheit linear", 3.2 "Reguliereinheit winklig" und 3.3 "Justiereinheit winklig" dar.

Eine lineare Reguliereinheit der Klasse 3.0 wie gezeichnet umfasst zwei in einer zweiten Raumrichtung länglichen, gegenseitig starr fixierten Leisten der Dimensionen analog den Leisten der Elemente der Klasse 1.0 "Stabelemente einfach", wobei eine erste dieser Leisten etwas länger als ein Öffnungsdurchmesser ist und an einem ersten Ende eine Öffnung mit Achse in einer ersten Raumrichtung, wiederum mit einem Standarddurchmesser, besitzt; die Länge einer zweiten dieser Leisten entspricht ungefähr der Länge eines Stabelements mit drei Öffnungen. Diese zweite der Leisten besitzt eine einzige, durch die Verbindung von drei Öffnungen, welche in Form und Anordnung identisch denjenigen der Elemente der bereits beschriebenen Klassen sind, entstandene längliche Öffnung. Zusätzlich weist diese zweite der Leisten eine um diese einzige längliche Öffnung herum mit einer gewissen Breite auf einer Seite der Leiste angebrachte verringerte Wandstärke auf. Dabei ist diese Breite so gewählt, dass auf der Seite, auf der die Wandstärke der Öffnung verringert ist, ein Rand bleibt. Eine so durch die Verringerung der Wandstärke erreichte Ausnehmung dient der Aufnahme einer Fixierplatte, welche in der Bauweise einem Element der Klasse 1.0 "Stabelemente einfach" mit zwei Öffnungen entspricht, aber eine Wandstärke besitzt, die der Verringerung der Wandstärke der zweiten der Leisten entspricht, und deren Seitenbreite in einer dritten Raumrichtung eine in der Ausnehmung versenkte Platzierung der Fixierplatte zulässt.

Eine solche Reguliereinheit 3.0 kann mittels zweier Hutschrauben 0.001 und Hülsenmuttern 0.002 zum Beispiel an ein Stabelement 1.0 geschraubt werden. Die zweite der zwei Leisten ist mit einem ihrer Enden fest mit einem zweiten Ende der ersten dieser zwei Leisten verbunden, wobei die Flächen dieser beiden Leisten jeweils parallel zueinander und die Seiten der beiden Leisten in einem Überlappbereich passgenau aufeinander angeordnet sind. Die Fixierplatte ist in der an der zweiten dieser Leisten angebrachten Ausnehmung versenkt und nimmt die beiden Hülsenmuttern 0.002 auf, welche von derselben Seite eingesetzt sind wie die Ausnehmung angebracht ist. Die Hülsenmutter 0.002 gehen nach der Fixierplatte zuerst durch die einzige Öffnung der zweiten der Leisten der Reguliereinheit 3.0, danach passgenau durch zwei benachbarte, an einem Ende liegende Öffnungen des Stabelements 1.0 und schlussendlich in die Hülsenmuttern, welche zur Fixierung aller Teile gegeneinander angezogen werden können. Genannte zwei Öffnungen des Stabelements 1.0 sind so gewählt, dass das Stabelement 1.0 in derselben Ebene zu liegen kommt, wie die erste der beiden Leisten der Reguliereinheit 3.0 und in zweiter Raumrichtung deren Verlängerung bildet. Insgesamt wird damit ein Bauteil konstruiert, das die Parallelverschiebung und stufenlose Fixierung des als Beispiel aufgeführten Stabelements 1.0 gegenüber der ersten der beiden Leisten der Reguliereinheit 3.0 erlaubt.

Ebenfalls in Figur 3 dargestellt ist ein Element der Klasse 3.1 "Justiereinheit linear", welche im Wesentlichen aus zwei Teilen 3.1-1, 3.1-2 aufgebaut ist. Der zweite Teil 3.1-2 ist analog dem zweiten Teil 3.0-2 des Elements der Klasse 3.0 "Reguliereinheit linear" konstruiert, ohne allerdings eine Ausnehmung aufzuweisen. Dafür besitzt der zweite Teil 3.1-2 an einem Ende der länglichen Öffnung eine senkrechte Endplatte mit einer Gewindebohrung. Diese Endplatte ist auf einer der ersten, mit nur einer Öffnung versehenen Leiste, gegenüberliegenden Seite und an einem anderen Ende der zweiten Leiste angebracht. Der erste Teil 3.1-1 besteht aus einer zweiten Raumrichtung länglichen Leiste der Dimension und Form eines Elements der Klasse 1.0 "Stabelemente einfach", die nur zwei, an zwei Enden angebrachte Öffnungen in einer ersten Raumrichtung besitzt, weiter eine auf der einem ersten Ende der Leiste abgewandten Seite einer ersten Öffnung senkrecht angebrachte Platte aufweist, sowie eine zur länglichen Leiste parallel angebrachte, in einer dritten Raumrichtung formschlüssig über der länglichen Leiste platzierte und von dieser in erster Raumrichtung um die Wandstärke des zweiten Teils 3.1-2 beabstandete quaderförmige Struktur besitzt. Diese senkrecht angebrachte Platte besitzt im Wesentlichen quadratische Seitenflächen und eine den anderen Bauteilen analoge Wandstärke sowie eine zentral angebrachte Bohrung zur Aufnahme einer Justierschraube. Die quaderförmige Struktur besteht aus einem wannenförmigen Grundkörper, dessen Boden in erster Raumrichtung von der länglichen Leiste wegweist und dessen Ende analog und in der Projektion passgenau der parallel liegenden länglichen Leiste abgerundet ist. Am abgerundeten Ende des wannenförmigen Grundkörpers weist der Boden eine koaxial zu einer zweiten Öffnung der länglichen Leiste in erster Raumrichtung angebrachte Bohrung zur Aufnahme einer Klemmschraube auf. Besagte zweite Öffnung der länglichen Leiste besitzt ein Innengewinde, in den ein Aussengewinde der Klemmschraube greift, sodass der wannenförmige Grundkörper gegen die längliche Leiste verschraubbar ist. Mittels der Klemmschraube kann somit der zweite Teil 3.1-2 zwischen der quaderförmigen Struktur und der länglichen Leiste des ersten Teils 3.1-1 festgeklemmt werden.

Die Justierschraube ist drehbar und mittels eines Stifts (nicht ersichtlich) axial fixiert in der senkrechte Platte eingesetzten und umfasst angrenzend an die senkrechte Platte eine Mutter, welche fix mit der Justierschraube verbunden ist. Bezüglich der Mutter auf der gegenüberliegenden Seite der senkrechten Platte greift die Gewindestange der Justierschraube in das Gewinde der Endplatte ein. Dadurch kann durch ein Drehen der Justierschraube der erste Teil 3.1-1 gegenüber dem zweiten Teil 3.1-2 stufenlos verschoben werden. Die beiden Teile 3.1-1, 3.1-2 können durch die Klemmschraube gegenseitig fixiert werden, was eine Drehung der Justierschraube und gegenseitige Bewegung der beiden Teile 3.1-1 3.1-2 verunmöglicht und die Distanz zwischen den an den entgegengesetzten Enden der beiden Teile 3.1-1, 3.1-2 befindlichen Öffnungen fixiert.

Weiter in der Figur 3 abgebildet ist ein Element der Klasse 3.2 "Reguliereinheit winkelig", welches analog dem abgebildeten Element der Klasse 3.0 "Reguliereinheit linear" gebaut ist, mit der Ausnahme, dass die erste Leiste im Bereich der Öffnung in der Form von Elementen der Klasse 2.0 "Linearstreben" ausgebildet ist.

Als weiteres Ausführungsbeispiel ist in der Figur 3 ein Element der Klasse 3.3 "Justiereinheit winkelig" dargestellt, das analog den Elementen der Klasse 3.1 "Justiereinheit linear" konstruiert ist, mit derselben Ausnahme, die das Element der Klasse 3.2 "Reguliereinheit winkelig" gegenüber dem Element der Klasse 3.0 "Reguliereinheit linear" aufweist.

Die Figur 4 stellt Ausführungsbeispiele der leichten Ausführungsform von Elementen der Klassen 4.0 "Scharnierelemente", 4.1 "Drallelemente", 4.2 "Gelenkelemente" und 4.3 "Spinnenelemente" dar.

Elemente der Klasse 4.0 "Scharnierelemente" besteht aus zwei im Wesentlichen identischen Flügelplatten in der Bauweise von Elementen der Klasse 1.0 "Stabelemente einfach", wobei beide entweder eine oder zwei Öffnungen besitzen, die auf jeweils einer Stirnfläche durch ein Scharnier verbunden sind. In einer weiteren Ausführungsform kann auch eine Flügelplatte eine und die zweite Flügelplatte zwei Öffnungen aufweisen (nicht dargestellt).

Weitere Elemente der Klasse 4.0 "Scharnierelemente" bestehen aus zwei Flügelteilen, die jeweils aus zwei, rechtwinklig aufeinander stehenden Platten gefertigt sind, wobei letztere jeweils eine Öffnung mit Standarddurchmesser besitzen. Diese Platten haben eine möglichst kleine Seitenfläche, sodass sie jeweils eine einzelne Öffnung besitzen können, und dieselbe Wandstärke wie die Elemente der Klasse 1.0 "Stabelemente einfach". Bei diesen Flügelteilen sind die beiden Platten jeweils so gegeneinander angeordnet, dass die Kombination von zwei Flügelteilen durch Verbinden von jeweils einer der Öffnungen der beiden Flügelteile mit einer Hutschraube 0.001 und einer Hülsenmutter 0.003 die anderen Öffnungen der beiden Flügelteile auf gegenüberliegenden Seiten dieser Schraube liegen und koaxial sein können. Zwischen den zwei zu verschraubenden Flügelteilen kann eine Distanzscheibe 0.102 vorgesehen sein. Diese können in verschiedenen Dicken vorliegen und auch anderweitig eingesetzt werden. Der Innendurchmesser der Distanzscheiben 0.102 entspricht jeweils dem Aussendurchmesser der Hülsenmutter 0.002.

Ebenfalls in Figur 4 abgebildet sind Elemente der Klasse 4.1 "Drallelemente", die jeweils aus zwei mit ihren Seiten rechtwinklig aufeinander stehenden Platten in den Dimensionen der Elemente der Klasse 1.0 "Stabelemente" bestehen, welche beide entweder eine oder zwei Öffnungen haben. Diese beiden Platten sind mit Stirnflächen so aneinander befestigt, dass eine Seite einer ersten Platte in derselben Ebene einer Fläche einer zweiten Platte liegt und gleichzeitig eine Fläche der ersten Platte in derselben Ebene liegt wie eine Seite der zweiten Platte.

Weiter in Figur 4 dargestellt sind Elemente der Klasse 4.2 "Gelenkelemente", welche zu Kreuzgelenken verbaut werden können. Eine erste Ausführungsform 4.203 der Gelenkelemente 4.2, ausgebildet als Doppelgelenkelement L12.5-offset, besteht aus zwei rechtwinklig aufeinander stehenden Flügelteilen, welche jeweils eine Öffnung aufweisen. Eine zweite Ausführungsform 4.201, ausgebildet als Drehgelenkelement, besteht aus einem einzigen Flügelteil mit einer Öffnung, wobei der Flügelteil rechtwinklig zur Öffnung mit einer Hülse mit Innengewinde verbunden ist, wobei die Hülse der Hülsenmutter entsprechend aufgebaut ist. Die Hülse kann bezüglich der Öffnung axial versetzt oder zentrisch angeordnet sein, wobei sich die Hülsenachse und die Öffnungsachse in jedem Fall schneiden. Eine dritte Ausführungsform 4.205, ausgebildet als Schweissgelenkelement, besteht wiederum aus einem einzigen Flügel, wobei tangential zur Öffnung ein zum Anschweissen geeigneter Bereich vorgesehen ist. Im vorliegenden Ausführungsbeispiel ist werden nacheinander ein Gelenkelement der zweiten, der ersten und wieder der zweiten Ausführungsform über eine deren Öffnungen auf eine Hülsenmutter 0.003 geschoben und anschliessen mittels einer Hutschraube 0.001 fixiert. Die verschiedenen Ausführungsformen können jedoch auch anderweitig kombiniert werden.

Des Weiteren in Figur 4 dargestellt sind Elemente der Klasse 4.3 "Spinnenelemente", welche alle aus Platten oder Leisten mit jeweils zwei Seiten und zwei Flächen, analog den Elementen der Klassen 1.0 "Stabelemente einfach" und 1.1 "Stabelemente doppelt" bestehen. Die geometrische Form der Seitenflächen dieser Elemente ist sehr vielfältig und reicht von quadratischen oder quaderförmigen Platten mit zwischen vier und neun symmetrisch angebrachten Öffnungen bis hin zu einer kreuzförmigen Platte mit vier rechtwinklig aufeinander stehenden und gleich langen Armen, die eine Öffnung zentriert und je eine weitere Öffnung pro Arm angebracht hat. Eine weitere Ausführungsform eines Elements dieser Klasse besitzt eine T-Form, welche durch Abschneiden eines Armes des kreuzförmigen Elements entsteht. Wiederum eine andere Ausführungsform besitzt Seitenflächen in der Form von gleichseitigen Dreiecken mit drei symmetrisch angeordneten Öffnungen. Andere Ausführungsformen sind in L-Form mit zwei rechtwinklig aufeinander stehenden Armen ausgebildet und besitzen im Bereich einer Verbindung dieser beiden Arme eine Öffnung, während die beiden Arme eine oder zwei Öffnungen aufweisen. Nochmals eine andere Ausführungsform besitzt zwei parallele Reihen von Öffnungen, wobei eine erste Reihe drei und eine zweite Reihe zwei Öffnungen aufweist. Die beiden parallelen Reihen sind analog den beiden Reihen der Elemente 1.1 "Stabelemente doppelt" angeordnet und die Platte besitzt eine entsprechend einer minimalen Seitenfläche gewählte geometrische Form.

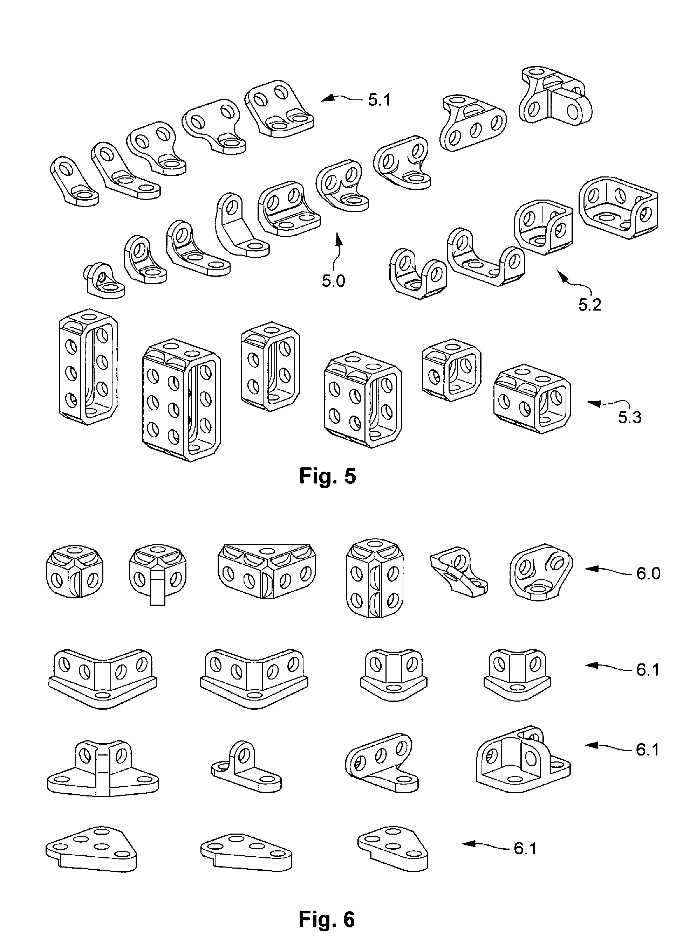

Die Figur 5 zeigt Ausführungsbeispiele der leichten Ausführungsform von Elementen der Klassen 5.0 "L90°-Winkelelemente", 5.1 "L45°-Winkelelemente", 5.2 "U-Elemente" und 5.3 "Boxelemente".

Ein Element der Klasse 5.0 "L90°-Winkelelemente" besteht aus zwei Leisten, die analog den Leisten der Elemente der Klasse 1.0 "Stabelemente einfach" gefertigt sind, welche rechtwinklig aufeinander stehen und bezüglich Kantenmitten symmetrisch so gegeneinander positioniert und fixiert sind, dass sie eine Kante der jeweiligen Seite gemeinsam haben. Die Leisten besitzen jeweils zwischen einer und drei Öffnungen, deren Form und Anbringung identisch den Öffnungen der Elemente der Klasse 1.0 "Stabelemente einfach" ist. Durch mögliche Kombinationen dieser Leisten ergeben sich viele Ausführungsformen, wovon ein paar abgebildet sind. In Varianten kann statt der Öffnung eine der Hutschraube entsprechende Hülse vorgesehen sein.

Eine spezielle Ausführungsform besitzt eine erste Leiste mit einer Öffnung und eine zweite Leiste mit zwei Öffnungen, deren Randabstand dem Randabstand von Öffnungen der Elemente der Klasse 2.0 "Linearstreben" entspricht. Eine weitere, spezielle Ausführungsform besitzt zwei rechtwinklig aufeinander stehende Leisten mit jeweils einer Öffnung, wobei Flächen und Stirnflächen der beiden Leisten parallel liegen, und eine Platte derselben Dimension und Ausführung der Leisten ohne Öffnung, wobei die beiden Leisten durch diese Platte in einer ersten und einer dritten Raumrichtung distanziert sind; die Seiten dieser Platte schliessen mit den Seiten der Leisten jeweils einen Winkel von 45° ein. Nochmals eine weitere Ausführungsform basiert auf einer Ausführungsform, deren Leisten eine einzige und drei Öffnungen besitzen, ersetzt jedoch eine mittlere Öffnung der Leiste mit drei Öffnungen, deren Achsen in eine erste Raumrichtung weisen, durch eine rechtwinklig und auf eine der Leiste mit einer einzigen Öffnung, deren Achse in einer dritten Raumrichtung liegt, entgegengesetzte Seite weisend angebrachte weitere Leiste mit einer einzigen Öffnung, deren Achse in einer zweiten Raumrichtung liegt. Letztere weitere Leiste ist in der Fertigung analog den Leisten der Elemente der Klasse 1.0 "Stabelemente einfach" gefertigt, besitzt aber eine etwas grössere Wandstärke.

Ebenfalls in Figur 5 abgebildet sind Elemente der Klasse 5.1 "45°-Winkelelemente", welche analog den Elementen der Klasse 5.0 "90°-Winkelelemente" gefertigt sind, aber deren Leisten einen Innenwinkel von 135° einschliessen anstatt rechtwinklig aufeinander zu stehen.

Weiter in Figur 5 dargestellt sind Elemente der Klasse 5.2 "U-Elemente", die aus drei Leisten der Form und Fertigung von Leisten der Elemente der Klasse 1.0 "Stabelemente einfach" bestehen, welche jeweils rechtwinklig aufeinander stehen und in U-Form angeordnet sind, mit einer Leiste in einer ersten Raumrichtung und zwei Leisten in einer zweiten Raumrichtung. Dabei besitzen die beiden Leisten in zweiter Raumrichtung jeweils eine Öffnung, wobei diese beiden Öffnungen durch die Anordnung der Leisten koaxial liegen, während die Leiste in erster Raumrichtung eine oder zwei Öffnungen aufweist. Statt einer Leiste in der ersten Raumrichtung können auch zwei senkrecht zueinanderstehende Leisten in der ersten Raumrichtung vorgesehen sein, so dass sich ein Quader ergibt, bei dem zwei zueinander angrenzende Seitenflächen fehlen.

Die Figur 5 zeigt weiter Ausführungsbeispiele der Klasse 5.3 "Boxelemente", welche aus vier Seitenplatten bestehen, die der Form und Fertigungsweise von Elementen der Klassen 1.0 "Stabelemente einfach" oder 1.1 "Stabelemente doppelt" entsprechen und die eine oder zwei Reihen von einer bis drei Öffnungen aufweisen. Ein solches Element besitzt jeweils zwei erste identische Seitenplatten mit einer oder zwei Öffnungen und zwei zweite identische Seitenplatten mit mindestens einer Öffnung. Die beiden ersten Seitenplatten sind parallel angeordnet und rechtwinklig an den beiden zweiten Seitenplatten befestigt, sodass die Öffnungen der beiden ersten Seitenplatten koaxial zu einander und die Öffnungen der beiden zweiten Seitenplatten ebenfalls koaxial zu einander sind. Mit den Seitenplatten ist weiter rechtwinklig eine Deckplatte verbunden, welche, entsprechend der Dimension der Seitenplatten, eine Reihe von ein bis drei Öffnungen aufweist. Eine Deckplatte muss allerdings nicht zwingen vorhanden sein.

In Figur 6 sind Ausführungsbeispiele von Elementen der Klassen 6.0 "Eckelemente", und 6.1 "Stützelemente" dargestellt.

Elemente der Klasse 6.0 "Eckelemente" einer ersten Ausführungsform bestehen aus drei Seitenleisten, die in Dimension und Fertigung analog den Elementen der Klasse 1.0 "Stabelemente einfach" mit einer oder zwei Öffnungen ausgebildet sind. Dabei sind zwei der drei Seitenleisten identisch ausgebildet und eine dritte Seitenleiste besitzt eine einzelne, in einer Seitenmitte angebrachte Öffnung. Alle drei dieser Seitenleisten sind durch Verbinden von jeweils einer Kante so mit einander kombiniert, dass Flächen oder Stirnflächen von zwei aneinandergrenzenden Seitenleisten rechtwinklig und bündig aufeinander stehen, wobei identisch ausgebildete Seitenleisten symmetrisch aneinander befestigt sind.

In der Ausführungsform, bei der die zwei Seitenleisten jeweils zwei Öffnungen besitzen und durch Verbinden von Stirnflächen aneinander angebracht sind, besitzt eine dritte der drei Seitenleisten in Abweichung von obengenannter Bauweise Seitenflächen in Form eines gleichschenkligen Dreiecks, wobei gleichschenklige Kanten von derselben Länge wie Seitenflächen der Seitenleisten sind.

Eine weitere Ausführungsform besitzt zusätzlich zu den drei Seitenleisten, welche in dieser Ausführungsform jeweils nur eine Öffnung besitzen, eine vierte Seitenleiste, die analog den anderen drei Seitenleisten ausgebildet ist. Diese vierte Seitenleiste ist mit einer ihrer Flächen oder Stirnflächen zwischen der ersten und zweiten Seitenleiste angebracht, sodass ihre Seiten mit den Seiten der ersten und der zweiten Seitenleiste jeweils einen Winkel von 135° einschliesst und sie auf die dritte Seitenleiste rechtwinklig steht.

Auch in Figur 6 dargestellt sind Elemente der Klasse 6.0 "Eckelemente", welche aus drei Leisten mit jeweils einer Öffnung, die im Wesentlichen analog den Elementen der Klasse 1.0 "Stabelemente einfach" gefertigt sind, bestehen. Eine erste dieser drei Leisten besitzt auf Trapezform vergrösserte Seitenflächen mit zwei benachbarten rechten Winkeln, einem Innenwinkel von 45° und einem weiteren Innenwinkel von 135°, während eine zweite dieser drei Leisten eine entsprechend grössere Länge aufweist. Dadurch wird eine gegenseitige Anbringung wie Folgt möglich: Die erste der drei Leisten wird rechtwinklig entlang einer kürzeren der zwei zueinander parallelen Kanten mit einer Kante einer dritten dieser drei Leisten verbunden, sodass sich Achsen der jeweiligen Öffnungen rechtwinklig in einem Punkt schneiden. Die zweite dieser drei Leisten wird nun durch Verbinden von einer der längeren Kanten mit einer längsten Kante der ersten der drei Leisten und einer kürzeren Kante mit einer Kante der dritten dieser drei Leisten derart angebracht, dass sie rechtwinklig auf die erste dieser drei Leisten steht und mit der dritten dieser drei Leisten einen Innenwinkel von 135° einschliesst, wobei sich die in dieser zweiten dieser drei Leisten befindliche Öffnung auf dem der dritten dieser drei Leisten abgewandten Ende befindet.

Weiter in Figur 6 abgebildet sind Elemente der Klasse 6.1 "Stützelemente" in diversen Ausführungsformen.

In zwei ersten Ausführungsformen besteht ein solches Element aus einer trapezförmigen Platte, wobei das Trapez zwei benachbarte rechte Winkel besitzt, die vier Öffnungen mit Standarddurchmesser und Standardrandabstand aufweist, welche rechtwinklig auf Seiten der Platte angebracht sind. Diese vier Öffnungen sind L-förmig als Kombination einer Reihe mit drei und einer Reihe mit zwei Öffnungen angeordnet, wobei diese beiden Reihen eine Öffnung gemeinsam haben. Die Ecken dieser Platte sind im Bereich der sich dort befindlichen Öffnungen abgerundet, analog den Ecken der Elemente der Klasse 1.1 "Stabelemente doppelt", und die Platte besitzt im Bereich der Reihe mit zwei Öffnungen eine verringerte Wandstärke. Da diese Verringerung der Wandstärke auf zwei verschiedenen Seiten der Platte angebracht werden kann, ergeben sich zwei mögliche Ausführungsformen.

In einer zweiten Ausführungsform, welche aus einer Platte in Form eines gleichschenkligen Dreiecks besteht, sind mit rechtwinklig auf Seiten der Platte stehenden Achsen Öffnungen mit Standarddurchmesser und Standardrandabstand T-förmig angebracht, wobei entlang einer an gleiche Schenkel angrenzenden Kante drei Öffnungen in einer ersten Reihe und entlang einer von einer mittleren der drei Öffnungen rechtwinklig abgehenden zweiten Reihe zwei Öffnungen liegen. Diese Ausführungsform besitzt, analog der ersten Ausführungsform, eine entlang der Kante reduzierte Wandstärke.

Die Platten können einseitig im Bereich einer oder mehrerer Öffnungen eine Aussparung aufweisen, so dass die Platte auch dann eben auf dem Boden aufliegen kann, wenn eine Schraube, mit dem Schraubenkopf gegen den Boden gerichtet, in einer Öffnung angeordnet ist.

Eine dritte Ausführungsform besteht aus vier Leisten, die eine analoge Form und Fertigung wie die Elemente der Klasse 1.0 "Stabelemente einfach" aufweisen, wobei zwei dieser vier Leisten zwei Öffnungen aufweisen, die allerdings einen um die Wandstärke einer dritten dieser vier Leisten vergrösserten Abstand haben, und sowohl die dritte wie auch eine vierte dieser vier Leisten eine einzelne Öffnung besitzen. Im Bereich jeder Öffnung ist jeweils eine der Ecken, im Fall der vierten dieser vier Leisten zwei benachbarte Ecken, abgerundet; bei den zwei dieser vier Leisten sind abgerundete Ecken benachbart. Diese zwei der vier Leisten sind mit Seiten rechtwinklig aufeinanderstehend durch Verbinden jeweils einer, den abgerundeten Ecken abgewandten Kante kombiniert. Eine dritte dieser vier Leisten ist rechtwinklig auf beide und in der Mitte von beiden der zwei dieser vier Leisten aufgebracht, wobei die abgerundete Ecke von den beiden zwei dieser vier Leisten wegweist. Eine vierte dieser vier Leisten ist auf einer der dritten dieser vier Leisten abgewandten Seite einer ersten der zwei dieser vier Leisten kantenmittig in Verlängerung der dritten Leiste angebracht.

In einer vierten Ausführungsform besteht ein solches Element aus zwei Leisten, die mit ihren Seiten rechtwinklig aufeinander stehend, miteinander verbunden sind. Eine erste

Leiste ist identisch den Leisten mit drei Öffnungen der Klasse 1.0 "Stabelemente einfach" ausgebildet während eine zweite Leiste analog gefertigt aber nur mit zwei an zwei Enden der Leiste angebrachten Öffnungen versehen ist. Die erste Leiste ist mit einer ihrer Flächen rechtwinklig in der Mitte einer Seite der zweiten Leiste fixiert, sodass eine Achse einer mittleren Öffnung der ersten Leiste Achsen der Öffnungen der zweiten Leiste rechtwinklig schneidet.

Gemäss einer fünften Ausführungsform, welche in der Bauweise analog der vierten Ausführungsform ist, ist die Länge einer ersten Leiste soweit reduziert, dass diese eine einzelne Öffnung aufnimmt.

Eine sechste Ausführungsform ist aus zwei Seitenleisten, in Form und Ausführung analog den Elementen der Klasse 1.0 "Stabelemente einfach", und einer Fussplatte gebildet. Die beiden Seitenleisten besitzen entweder eine oder zwei Öffnungen sowie jeweils eine im Bereich der Öffnung abgerundete Ecke und sind durch Verbinden von jeweils einer, der abgerundeten Ecke abgewandten Stirnfläche rechtwinklig verbunden. Die Fussplatte ist V-förmig ausgebildet, mit zwei identischen Schenkeln und besitzt im Bereich einer Verbindung dieser zwei Schenkel eine Öffnung mit Standarddurchmesser, deren Achse rechtwinklig auf die durch die beiden Schenkel gebildete Ebene steht. Die beiden Schenkel stehen bezüglich einander benachbarter Innenflächen rechtwinklig aufeinander und verjüngen sich von der Öffnung weg, sodass sie an äusseren Enden eine quadratische Querschnittsfläche aufweisen. Auf dieser derart ausgebildeten Fussplatte sind die verbundenen Seitenleisten rechtwinklig fixiert, sodass einander benachbarte Innenseiten der Seitenleisten bündig an die benachbarten Innenflächen der Fussplatte anschliessen und die äusseren Enden der Fussplatte passgenau auf äussere Enden der Seitenleisten treffen.

Dargestellt ist ebenfalls eine siebte Ausführungsform, die aus drei länglichen Seitenleisten und zwei Fussplatten besteht. Alle drei dieser Seitenleisten sind im Wesentlichen analog den Elementen der Klasse 1.0 "Stabelemente einfach" mit einer einzelnen Öffnung ausgebildet, wobei eine erste und eine zweite dieser Seitenleisten abweichend davon eine vergrösserte Breite aufweisen und eine dritte dieser Seitenleisten in Abweichung davon keine Öffnung aber dafür eine vergrösserte Wandstärke und eine ebenfalls vergrösserte Breite besitzt. Die Fussplatten haben dieselbe Wandstärke wie die erste Seitenleiste, sind in der Form eines Drachenvierecks mit einem der inneren Winkel von 120° gefertigt und weisen in einer, dem 120°-Winkel gegenüberliegenden Ecke eine Öffnung mit Standarddurchmesser auf. Des Weiteren sind an den 120°-Winkel anschliessende Kanten des Drachenvierecks gleichlang wie eine Länge der Seite der Seitenflächen. Die drei Seitenleisten sind an Stirnflächen miteinander verbunden, sodass ihre Flächen eine Ebene bilden und schliessen gegenseitig jeweils einen Winkel von 120° ein. Dabei sind die erste und die zweite Seitenfläche so platziert, dass Achsen ihrer Öffnungen sich in einem Punkt schneiden und die dritte Seitenfläche dazwischen liegt. An einem den Öffnungen der ersten und zweiten Seitenleiste abgewandten Ende sind die Fussplatten angebracht, sodass die dritte Seitenleiste zwischen den beiden Fussplatten liegt, wobei eine Achse der darin angebrachten Öffnungen jeweils parallel zu den Seiten der beiden angrenzenden Seitenflächen ist.

Die Stützelemente 6.1 können beispielsweise auch eingesetzt werden, um eine Werkstückträgerplatte 8.0 (siehe unten) als Deckplatte auf einem Gefüge zu montieren. Der Begriff "Stützelement" ist daher nicht als Einschränkung für dessen Einsatz zu verstehen.

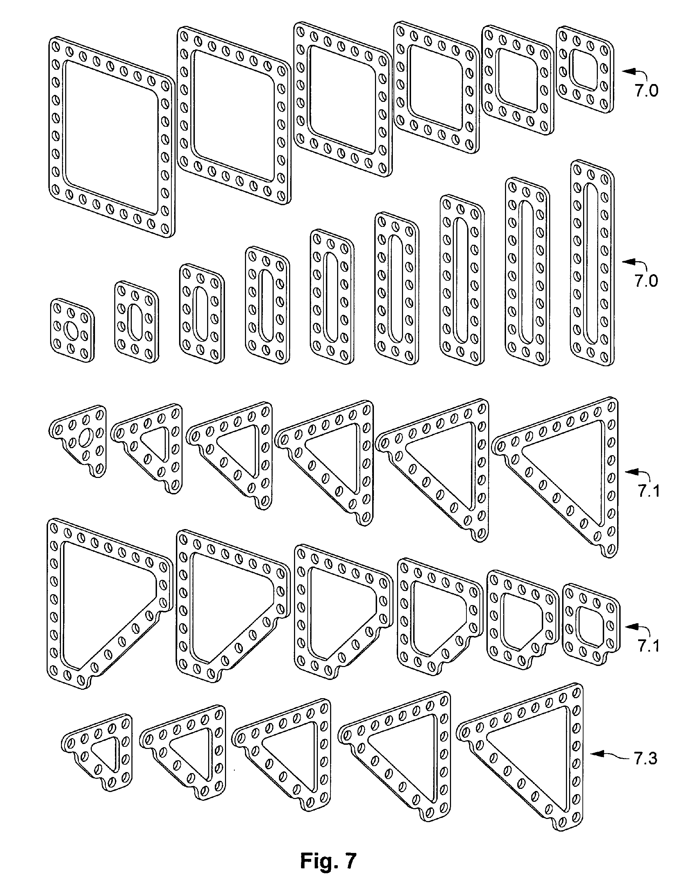

In der Figur 7 sind Ausführungsbeispiele von Elementen der Klassen 7.0 "90°-Rahmen", 7.1 "45°-Rahmen", 7.2 "90°×45°+2L25-Rahmen" und 7.3 "90°×45°+L25-Rahmen" abgebildet. Alle Elemente dieser Klassen bestehen aus einem Rahmen, dessen in einer Ebene liegende Rahmenleisten in Form und Ausführung analog den Elementen der Klassen 1.0 "Stabelemente einfach" und/oder 2.0 "Linearstreben" inklusive angebrachter Öffnungen entsprechen. Dabei ist die geometrische Form des Rahmens dergestalt, dass Achsen aller angebrachten Öffnungen parallel zueinander liegen und Öffnungen in Ecken des Rahmens beiden dort zusammenkommenden Rahmenleisten gemeinsam sind.

Die Elemente der Klasse 7.0 "90°-Rahmen" besitzen vier Rahmenleisten, welche alle analog den Elementen der Klasse 1.0 "Stabelemente einfach" gefertigt sind und zwischen drei und elf Öffnungen besitzen, wobei immer zwei der vier Rahmenleisten identisch ausgebildet sind und gegenüberliegende Rahmenleisten des Rahmens bilden. Jeweils zwei aneinandergrenzende Rahmenleisten stehen senkrecht aufeinander, wodurch ein Rahmen in Form eines Rechtecks gebildet wird.

In Figur 7 weiter dargestellt sind Elemente der Klasse 7.1 "45°-Rahmen", die aus drei Rahmenleisten gebildet sind, welche ein gleichschenkliges, rechtwinkliges Dreieck bilden. Zwei dieser drei Rahmenleisten, welche Katheten des Dreiecks bilden, sind analog den Elementen der Klasse 1.0 "Stabelemente einfach" gefertigt, während eine dritte Rahmenleiste, welche die Hypotenuse des Dreiecks bildet, analog den Elementen der Klasse 2.0 "Linearstreben" ausgebildet ist. Die Kombination der drei Rahmenleisten ist analog den Elementen der Klasse 7.0 "90°-Rahmen".

Die Figur 7 zeigt ebenfalls Elemente der Klasse 7.2 "90°×45°+2L25-Rahmen", deren Rahmen aus fünf Rahmenleisten gebildet sind. Dabei ist ein erstes und ein zweites Paar Rahmenleisten jeweils identisch gefertigt und analog den Elementen der Klasse 1.0 "Stabelemente einfach" ausgebildet, während eine fünfte Rahmenleiste wie die Elemente der Klasse 2.0 "Linearstreben" gestaltet ist. Rahmenleisten des zweiten Paares besitzen drei Öffnungen. Das erste Paar der Rahmenleisten steht rechtwinklig aufeinander und bildet eine L-Form; Rahmenleisten des zweiten Paares stehen jeweils rechtwinklig auf Enden der L-Form des ersten Paares. Die fünfte Rahmenleiste bildet eine Verbindung zwischen Enden der Rahmenleisten des zweiten Paares und schliesst den Rahmen ab, wobei sie mit jeder der das zweite Paar der Rahmenleisten bildenden Rahmenleisten jeweils einen 135°-Winkel einschliesst.

Die Figur 7 zeigt schliesslich Elemente der Klasse 7.3 "90°x45°+L25-Rahmen", deren Rahmen aus vier Rahmenleisten gebildet sind. Dabei bilden eine erste Rahmenleiste mit n Öffnungen und eine zweite Rahmenleiste mit n+1 Öffnungen einen rechten Winkel. Anschliessend an die erste Rahmenleiste gliedert sich rechtwinklig eine dritte Rahmenleiste an, welche zwei Öffnungen umfasst, wobei sie eine Öffnung mit der ersten Rahmenleiste teilt. Die vierte Rahmenleiste verbindet die beiden Enden der obig beschriebenen Form, womit sich im Wesentlichen ein geschlossenes Dreieck ergibt.

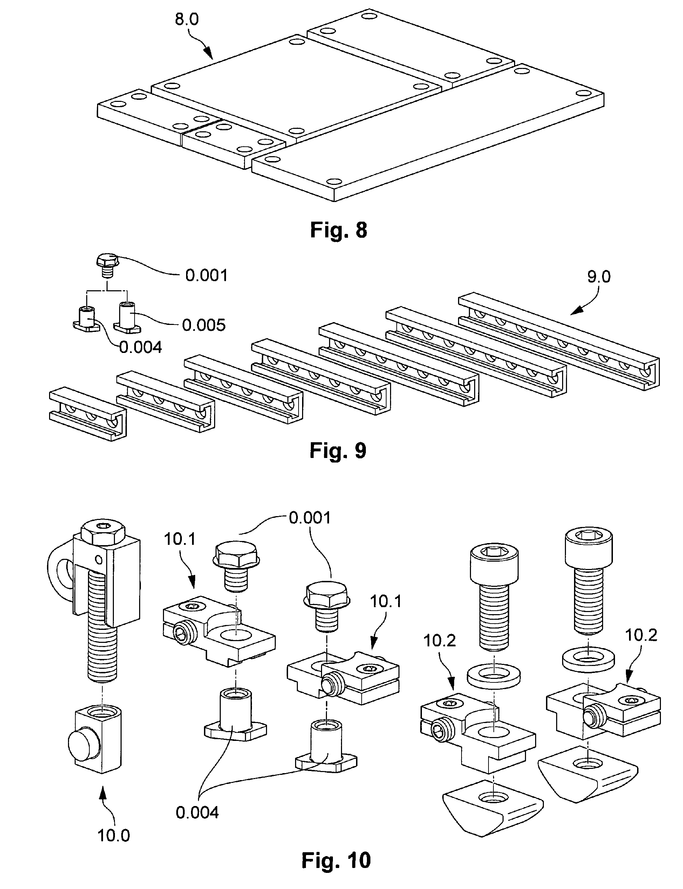

Die Figur 8 stellt Ausführungsbeispiele von Elementen der Klasse 8.0 "Werkstückträgerplatten" dar. Diese bestehen aus einer quaderförmigen Platte, wobei eine Wandstärke in einer dritten Raumrichtung deutlich kleiner ist, als Ausdehnungen in einer ersten und zweiten Raumrichtung sind. In allen Ecken der Platte sind Öffnungen mit Standarddurchmesser angebracht, deren Achsen in dritter Raumrichtung liegen. Solche Werkstückträgerplatten sind für eine Bearbeitung und Anpassung an bauliche Gegebenheiten am Einbauort vorgesehen. Dem Fachmann ist allerdings klar, dass die, oder gewisse Öffnungen in den Ecken auch durch den Anwender hergestellt werden können, womit eine solche Platte auch ohne, oder mit weniger Öffnungen vorgesehen sein kann.

In Figur 9 sind Ausführungsbeispiele von Elementen der Klasse 9.0 "T-Nutschienen" abgebildet. Solche T-Nutschienen bestehen aus einer Fussleiste und zwei identischen, parallelen Seitenleisten, welche rechtwinklig auf die Fussleiste stehen, sodass sich insgesamt ein U-förmiger Querschnitt ergibt. Sowohl Fussleiste wie Seitenleisten besitzen ungefähr gleich grosse Querschnittsflächen und dieselbe Wandstärke wie Elemente der Klasse 1.0 "Stabelemente einfach". Darüber hinaus sind in der Fussleiste, analog den Elementen der Klasse 1.0 "Stabelemente einfach", je nach Ausführungsform, 3 bis 9 Öffnungen angebracht. Die Seitenleisten besitzen ferner an ihren der Fussleiste entgegengesetzten Enden kragenförmige Erweiterungen, die gegeneinander gerichtet und parallel zur Fussleiste angebracht sind. Weiter zeigt die Figur 9 eine Hülsenmutter mit T-Nut-Kopf in der kurzen 0.004 und der langen 0.005 Ausführungsform. Die Köpfe dieser Hülsenmuttern sind trapezförmig ausgebildet, so dass sie von oben in die T-Nutschiene 9.0 eingeführt werden können. Durch eine Drehung um deren Längsachse kann der Kopf der Hülsenmutter die kragenförmige Erweiterung hintergreifen, so dass mittels der Hutschraube 0.001 ein Bauteil an die T-Nutschiene 9.0 angeschraubt werden kann.

Figur 10 stellt Ausführungsbeispiele der leichten Ausführungsform von Elementen der Klassen 10.0 "Nachstelleinheiten linear" und 10.1 "Nachstelleinheiten lateral" dar.

Elemente der erstgenannten Klasse bestehen aus einer im Wesentlichen quaderförmigen Halterung mit zentraler, in Richtung grösster Wandstärke angebrachten Bohrung und einer von einer Aussenseite her in Richtung der Gewindebohrung angebrachten Aussparung mit U-förmigem Querschnitt. Diese Aussparung besitzt einen grösseren Durchmesser als die Bohrung und ist so angebracht, dass der Querschnitt der resultierenden Halterung im Bereich der Aussparung rechtwinklig zur Richtung der Bohrung ebenfalls U-förmig ist. Diese Halterung weist weiter eine seitlich rechtwinklig angebrachte, von der Halterung wegweisende Lochplatte mit einer Wandstärke analog den Elementen der Klasse 1.0 "Stabelemente einfach" auf, die eine zentral angebrachte Öffnung bekannten Durchmessers besitzt, wobei eine Achse dieser Öffnung rechtwinklig auf eine Achse der Bohrung steht. Die Halterung besitzt zudem eine in die Bohrung passende Schraube mit Sechskantkopf, welche rotierbar und axial fixiert in der Bohrung gehalten ist, mit zugehöriger Gewindemutter, wobei letztere die Form der Aussparung hat, wodurch sie durch Drehen der Schraube in die Aussparung der Halterung eingezogen werden kann. Auf einer nicht gekrümmten Mantelfläche weist die Gewindemutter einen flächenmittig aufgesetzten zylinderförmigen Zapfen auf, dessen Symmetrieachse rechtwinklig auf die Gewindebohrung steht und welcher einen Durchmesser identisch den in den Elementen der Klasse 1.0 "Stabelemente einfach" angebrachten Öffnungen besitzt.

Ebenfalls in Figur 10 dargestellt sind Elemente der Klasse 10.1 "Nachstelleinheiten lateral", die aus einem quaderförmigen Grundkörper bestehen, welcher in eine dritte Raumrichtung eine kleinste, in eine zweite Raumrichtung eine mittlere und in eine erste Raumrichtung eine grösste Wandstärke besitzt. Dabei entspricht die kleinste Wandstärke ungefähr der Wandstärke der Elemente der Klasse 1.0 "Stabelemente einfach", während die grösste Wandstärke in etwa der Länge eines Elements der Klasse 1.0 "Stabelemente einfach" mit zwei Öffnungen entspricht. In Richtung der grössten Wandstärke parallel zur mittleren Wandstärke ist von einer ersten Aussenseite her seitenmittig eine quaderförmige Aussparung im Grundkörper angebracht, deren Ausdehnung in Richtung der mittleren Wandstärke gerade dieser Wandstärke entspricht, in Richtung kleinster Wandstärke nur wenige Millimeter beträgt und die in Richtung grösster Wandstärke ungefähr einen Drittel der Wandstärke des Grundkörpers ausmacht. An einem inneren Ende wird die Aussparung durch eine parallel zur mittleren Wandstärke angebrachte Gewindebohrung kleinen Durchmessers abgeschlossen, welche eine erste Gewindeschraube mit Inbuskopf aufnimmt. Der Grundkörper besitzt ferner im Bereich dieser Aussparung eine rechtwinklig zur Aussparung und in Richtung kleinster Wandstärke angebrachte Gewindebohrung sowie eine in diese Gewindebohrung passende zweite Gewindeschraube mit Inbuskopf, welche durch Zusammenpressen der quaderförmigen Aussparung eine Fixierung der ersten Gewindeschraube ermöglicht. Von einer zweiten, der ersten Aussenseite gegenüberliegenden Aussenseite her besitzt der Grundkörper einen Bereich mit durch einseitige Ausnehmung in dritter Raumrichtung auf ungefähr die Hälfte verringerter Wandstärke, dessen Ausdehnung in erster Raumrichtung ungefähr der halben Wandstärke in dieser Richtung entspricht, sowie eine ungefähr zentral in diesem Bereich, in dritter Raumrichtung angebrachte Öffnung mit Standarddurchmesser. Im Bereich der Öffnung besitzt der Grundkörper zudem eine wieder vergrösserte Wandstärke in dritter Raumrichtung, welche durch einen aussen auf den Grundkörper aufgebrachten quaderförmigen Aufsatz erreicht wird, dessen Ausdehnung in zweiter Raumrichtung der Wandstärke des Grundkörpers in dieser Raumrichtung entspricht. Der quaderförmige Aufsatz dient zur Führung in einer T-Nutschiene 9.0. Über die Öffnung mit Standarddurchmesser kann die Nachstelleinheiten lateral 10.1 mittels einer Hülsenmutter mit T-Nut-Kopf 0.004 und einer Hutschraube 0.001 festgeschraubt werden. Über die Gewindeschraube kann damit ein weiteres Bauteil lateral nachgestellt werden.

Eine weitere Ausführungsform der Nachstelleinheiten lateral "speziell" 10.2 unterscheidet sich von der obig beschriebenen lediglich dadurch, dass der quaderförmige Aufsatz grösser ausgebildet ist. Diese Ausführungsform ist für herkömmliche, im Handel erhältliche Nutschienen vorgesehen, wobei der in der Figur 10 auch dargestellte prismatische, einen trapezförmigen Querschnitt aufweisende Nutensteine mit einer Bohrung und die entsprechende Inbusschraube ebenfalls handelsüblich sind.

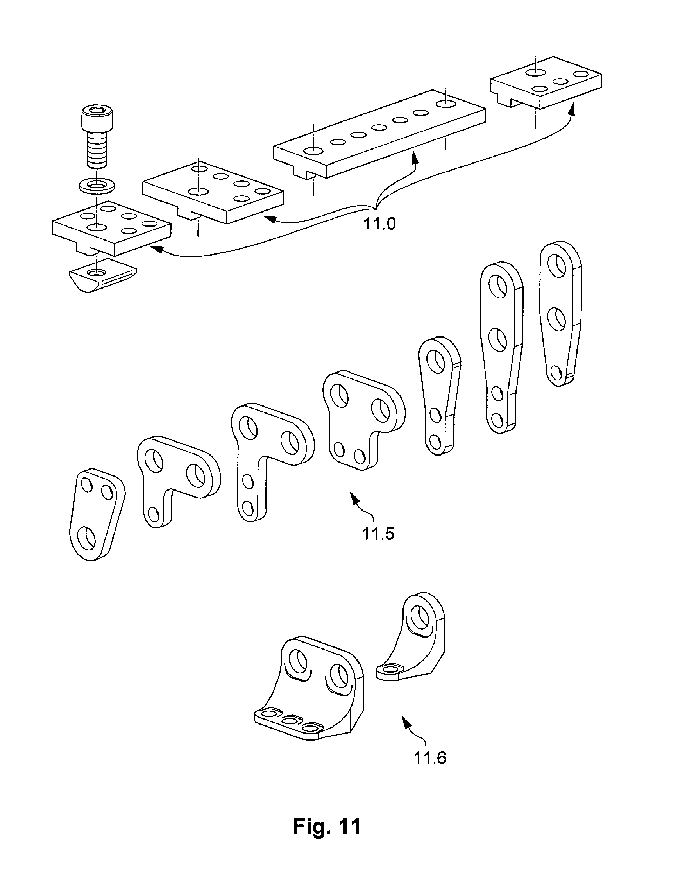

Die Figur 11 zeigt Ausführungsbeispiele von Elementen der Klasse 11.0 "Halterungen NS8" und Adapterelemente 11.5, 11.6. Dabei besitzt die Grundplatte 110-1 in einer ersten Raumrichtung eine erste Wandstärke, in einer zweiten Raumrichtung eine zweite Wandstärke und in einer dritten Raumrichtung eine dritte Wandstärke, wobei die dritte Wandstärke ungefähr der Wandstärke eines Elements der Klasse 8.0 "Werkstückträgerplatten" entspricht. Die Halterungen NS8 11.0 umfasst einen Quaderförmigen Aufsatz auf, welcher als Führung in einer handelsüblichen Nutschiene dient. Die Grundplatte weist mindestens eine Bohrung für eine handelsübliche Inbusschraube, sowie mehrere Bohrungen mit Standarddurchmesser auf. Mittels der Inbusschraube und des Nutensteins kann die Halterung NS8 11.0 an einer Nutschiene befestigt werden. Die Bohrungen mit Standarddurchmesser dienen damit als Adapter, so dass obig beschriebene Bauteile an der Halterung befestigt werden können.

In einer ersten Ausführungsform sind zwei gegenüberliegende Seiten der Grundplatte, deren Kanten in erster und zweiter Raumrichtung liegen, ungefähr quadratisch. Entlang einer ersten Seitenkante in erster Raumrichtung sind in der Grundplatte rechtwinklig zur Seite drei Öffnungen mit Durchmessern in bekannter Dimension in einer Reihe parallel zur ersten Seitenkante und von dieser um einige Millimeter beabstandet angebracht. In einer Mitte einer der ersten Seitenkante gegenüberliegenden zweiten Seitenkante derselben Seite ist eine Bohrung in dritter Raumrichtung vorgenommen, die von der zweiten Seitenkante um einige Millimeter beabstandet ist und deren Durchmesser gleich einem Durchmesser einer Gewindestange der Schraube ist. Im Bereich dieser Bohrung besitzt die Grundplatte auf einer Seite einen quaderförmigen Aufsatz mit Oberflächen parallel zu Oberflächen des Grundkörpers, dessen Ausdehnung in erster Raumrichtung ungefähr der Wandstärke des Grundkörpers in dritter Raumrichtung entspricht, während eine Ausdehnung in zweiter Raumrichtung etwas grösser als ein Durchmesser der Bohrung ist. Die Ausdehnung des Aufsatzes in dritter Raumrichtung beträgt einige Millimeter. Die in der Grundplatte angebrachte Bohrung ist durch diesen Aufsatz hindurch fortgeführt.

Der Nutenstein ist in zweiter Raumrichtung länglich und besitzt eine trapezförmige, symmetrische Querschnittsfläche, wobei eine Ausdehnung in zweiter Raumrichtung der Ausdehnung des Aufsatzes des Grundkörpers in zweiter Raumrichtung entspricht und die Querschnittsfläche in einer durch die erste und dritte Raumrichtung gebildeten Ebene liegt. Von einer Oberfläche des Nutensteins, welche in erster und zweiter Raumrichtung liegt, her, besitzt der Nutenstein eine in dritter Raumrichtung, entlang einer Symmetrieachse der Querschnittsfläche ein Innengewinde, deren Abstand von einem Ende des Nutensteins einem Abstand der Bohrung in der Grundplatte von der zweiten Seitenkante entspricht und deren Gewindedurchmesser einem Gewindedurchmesser der Schraube entspricht. Insgesamt baut sich diese erste Ausführungsform Folgendermassen auf: Einführen der Gewindestange der Schraube nach der Distanzscheibe in die in der Grundplatte und dem Aufsatz vorgenommene Bohrung von der, dem Aufsatz abgewandten Seite des Grundkörpers her; Einschrauben eines Gewindes der Schraube in die dafür vorgesehene Gewindebohrung der Fussplatte, wobei letztere ihre Ausrichtung beibehält.

Eine zweite Ausführungsform besitzt eine Grundplatte, deren Ausdehnung in erster Raumrichtung soweit gegenüber der ersten Ausführungsform vergrössert ist, dass anstelle von drei Öffnungen nun vier Öffnungen angebracht werden können.

Bei einem dritten Ausführungsbeispiel weist die Grundplatte in erster Raumrichtung eine gegenüber der ersten Ausführungsform etwas verkleinerte Ausdehnung auf, während deren Ausdehnung in zweiter Raumrichtung deutlich vergrössert ist und ungefähr der dreifachen Ausdehnung in erster Raumrichtung entspricht. In einer Mitte von zwei gegenüberliegenden Seitenkanten, die in erster Raumrichtung liegen, einer in erster und zweiter Raumrichtung liegenden Seite der Grundplatte besitzt die Grundplatte jeweils eine Bohrung, die analog der Bohrung der ersten Ausführungsform angebracht sind. Diese dritte Ausführungsform besitzt ferner zwei Schrauben inklusive Distanzscheiben und zwei Nutensteine, die jeweils identisch den Schrauben und Nutensteine der ersten Ausführungsform sind. Zwischen diesen zwei Bohrungen sind in der Grundplatte auf der durch diese zwei Bohrungen gebildeten Reihe drei Öffnungen mit Standarddurchmesser in dritter Raumrichtung angebracht, wobei eine erste und eine dritte Öffnung nahe bei der jeweiligen Bohrung liegt und eine zweite Öffnung mittig platziert ist.

Eine vierte Ausführungsform besitzt einen Grundkörper mit in erster Raumrichtung einer gegenüber der ersten Ausführungsform etwas verringerten Ausdehnung und in zweiter Raumrichtung einer Ausdehnung, die ein Anbringen von drei Öffnungen mit Standarddurchmesser entlang einer Kante erlaubt. Somit erhalten zwei gegenüberliegende, in erster und zweiter Raumrichtung liegende Seiten des Grundkörpers eine rechteckige Form. Diese drei Öffnungen sind entlang einer ersten Seitenkante, die in zweiter Raumrichtung liegt, analog den Öffnungen in den ersten zwei Ausführungsformen angebracht. In einer Mitte einer zweiten, der ersten gegenüberliegenden Seitenkante derselben Seite, welche ebenfalls in zweiter Raumrichtung liegt, ist analog den ersten drei Ausführungsformen eine Bohrung zur Aufnahme der Schraube vorgenommen. Ein ebenfalls analog den ersten drei Ausführungsformen gestalteter quaderförmiger Aufsatz, dessen Ausdehnung in zweiter Raumrichtung der Ausdehnung des Grundkörpers in derselben Raumrichtung entspricht, ist in zweiter Raumrichtung ausgerichtet liegend auf einer Seite im Bereich der Bohrung angebracht, wobei zwei in erster und dritter Raumrichtung liegende Endflächen formschlüssig an in erster und dritter Raumrichtung liegende Endflächen des Grundkörpers anschliessen. Wie bei den ersten drei Ausführungsformen ist die Bohrung der Grundplatte durch den Aufsatz fortgeführt. Ein Hindurchführen einer Gewindestange der Schraube durch Distanzscheibe und Bohrung der Grundplatte mit Aufsatz, wobei ein Schraubenkopf der Schraube auf einer dem Aufsatz entgegengesetzten Seite der Grundplatte zu liegen kommt, sowie nachfolgende Einschraubung der Gewindestange in eine Gewindebohrung des Nutensteins ergeben die komplette vierte Ausführungsform.

Figur 11 zeigt weiter Elemente der Klasse 11.5 "Adapter linear" und 11.6 "Adapter winklig". Die Adapter linear 11.5 sind ähnlich den Spinnenelementen und die Adapter winklig 11.6 ähnlich den Winkelelementen 5.0 aufgebaut. Im Unterschied weisen diese aber unterschiedliche Öffnungsdurchmesser auf, so dass ein Übergang zwischen der grossen Ausführungsform und der kleinen Ausführungsform der Bauteile geschaffen werden kann.

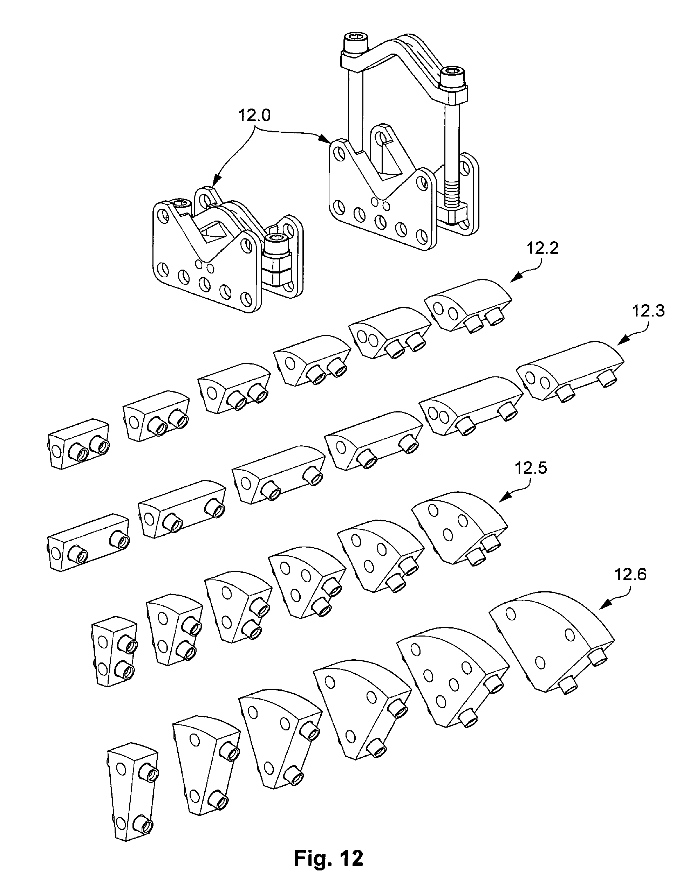

In Figur 12 sind Ausführungsbeispiele von Elementen der Klassen 12.0 "Prismamodule", 12.2 "Keilflansche radial L12.5", 12.3 "Keilflansche radial L25", 12.5 "Keilflansche axial L12.5" und 12.6 "Keilflansche axial L25" abgebildet.

Elemente der erstgenannten Klasse bestehen aus zwei parallel angeordneten, identischen Seitenplatten, einer die beiden Seitenplatten verbindende, quaderförmige Fussschiene, einer Fixierungsschiene sowie zwei Schrauben. Die beiden Seitenplatten besitzen in einer ersten Raumrichtung eine Ausdehnung, welche ein Anbringen von fünf Öffnungen analog den Elementen der Klasse 1.0 "Stabelemente einfach" erlaubt, in einer dritten Raumrichtung eine ungefähr halb so grosse Ausdehnung wie in erster Raumrichtung und in einer zweiten Raumrichtung eine Ausdehnung von mindestens einem Öffnungsdurchmesser. Eine erste Seite jeder Seitenplatte, die in erster und dritter Raumrichtung liegt, weist an vier Ecken jeweils eine Öffnung mit Standarddurchmesser in zweiter Raumrichtung auf, sowie entlang einer in erster Raumrichtung liegenden ersten Seitenkante zwischen den in den daran angrenzenden Ecken angebrachten Öffnungen drei weitere, identische Öffnungen, sodass entlang dieser ersten Seitenkante eine Reihe von insgesamt fünf Öffnungen in gleichmässigen Abständen mit Standardrandabstand liegen. Des weiteren besitzt jede dieser Seitenplatten von einer zweiten Seitenkante, welche parallel zur ersten Seitenkante liegt, her parallel zur ersten Seite in dritter Raumrichtung eine dreiecksförmige, symmetrisch bezüglich erster und zweiter Raumrichtung angebrachte Aussparung mit einer Ausdehnung in zweiter Raumrichtung, die einer Wandstärke der Seitenplatte in dieser Raumrichtung entspricht, deren Spitze in einer Seitenmitte der ersten Seite liegt. Entlang der zweiten Seitenkante weist die Aussparung eine maximale Länge auf, wobei die in den an diese Seitenkante angrenzenden Ecken liegenden Öffnungen mindestens eine den anderen Öffnungen entsprechende Wandstärke aufweisen. Weiter weist jede der Seitenplatten auf einer zweiten, parallel zur ersten Seite liegenden Seite, entlang in dritter Raumrichtung liegenden Seitenkanten eine Reduktion der Wandstärke in zweiter Raumrichtung auf, deren Ausdehnung in erster Raumrichtung etwas mehr als einen Öffnungsdurchmesser plus Wandstärke der Öffnung beträgt.

Die Fussschiene besitzt in zweiter und dritter Raumrichtung eine ungefähr gleich grosse Ausdehnung von einigen Millimetern, in erster Raumrichtung dieselbe Ausdehnung wie die Seitenplatten in derselben Raumrichtung. An zwei gegenüberliegenden Enden sind in dritter Raumrichtung je eine Gewindebohrung angebracht, welche der Aufnahme einer Gewindestange jeweils einer der Schrauben dient. Auf zwei in erster und dritter Raumrichtung liegenden Seiten der Fussschiene sind die beiden Seitenplatten symmetrisch gegenüberliegend befestigt, wobei die ersten Seiten der beiden Seitenplatten von der Fussschiene weg weisen und die Fussschiene in dritter Raumrichtung zwischen der Reihe von Öffnungen und der Spitze der Aussparung der Seitenplatten liegt. Die Fixierungsschiene besitzt in allen drei Raumrichtungen Wandstärken identisch den Ausdehnungen der Fussschiene in diesen Raumrichtungen. Ihre geometrische Form in erster und dritter Raumrichtung entspricht einem umgekehrten V mit an Enden angebrachten, in erster Raumrichtung ausgedehnten Verlängerungen, wobei diese Form einen identischen Öffnungswinkel wie die in den Seitenplatten angebrachten Aussparungen hat. In den Verlängerungen sind in dritter Raumrichtung Bohrungen zur Aufnahme der Gewindestange je einer Schraube angebracht, wodurch die Fixierungsschiene mittels den zwei Schrauben unter Einklemmen eines in einem durch die Aussparung in den Seitenplatten einerseits und die Form der Fixierungsschiene andererseits gebildeten Durchgang liegenden Objektes gegen die Fussschiene gespannt werden kann.

Figur 12 zeigt ebenfalls Elemente der Klasse 12.2 "Keilflansche radial L12.5" und der Klasse 12.3 "Keilflansche radial L25", die aus einem Keilkörper und daran befestigten Hülsenmuttern bestehen. Der Keilkörper besitzt eine geometrische Querschnittsfläche eines aus einer Kreisringscheibe ausgeschnittenen Sektors, wobei eine Achse dieser Kreisringscheibe in zweiter Raumrichtung liegt. Ein Zentriwinkel des Sektors beträgt zwischen 15° und 90°, wobei ein innerer Radius der Kreisringscheibe so gewählt ist, dass eine durch diesen Radius erzeugte Wandstärke des Keilkörpers eine Ausdehnung von einigen Millimetern hat. Ein äusserer Radius der Kreisringscheibe ergibt sich durch den zur Anbringung von jeweils einer Hülsenmutter auf zwei in radialer und axialer Richtung liegenden Aussenflächen des Keilkörpers benötigten Radiusunterschied zum inneren Radius. Der Keilkörper weist in axialer Richtung eine Ausdehnung auf, die ein Anbringen von zwei Hülsenmuttern im Standardabstand (Keilflansche radial L12.5) oder im doppelten Standardabstand (Keilflansche radial L25) erlaubt, wobei die Hülsenmuttern denselben Abstand wie die in Elementen der Klasse 1.0 "Stabelemente einfach" besitzen. Im Keilkörper sind in axialer Richtung für Zentriwinkel unter 45° eine oder für Zentriwinkel über 45° zwei Zentralbohrungen bei demselben Radius wie die Hülsenmuttern angebracht, wobei im Falle von zwei diese denselben Abstand von der Achse haben. Auf diese Bohrungen kann allerdings verzichtet werden, da sie rein konstruktionsbedingt vorliegen.

Weiter in Figur 12 dargestellt sind Elemente der Klasse 12.5 "Keilflansche axial L12.5" und der Klasse 12.6 "Keilflansche axial L25"", welche analog den Elementen der Klasse 12.2 und 12.3 "Keilflansche radial" gefertigt sind, deren Ausdehnung in radialer Richtung aber eine Anbringung einer einzigen Hülsenmutter erlaubt, während deren Ausdehnung in axialer Richtung eine Anbringung von zwei Hülsenmuttern im Standardabstand (Keilflansche axial L12.5) oder im doppelten Standardabstand (Keilflansche axial L25) ermöglicht. Wiederum weist der Keilkörper Zentralbohrungen in axialer Richtung auf, welche bei demselben Radius wie die Hülsenmuttern angebracht sind, welche auch hier rein fertigungstechnisch vorliegen.

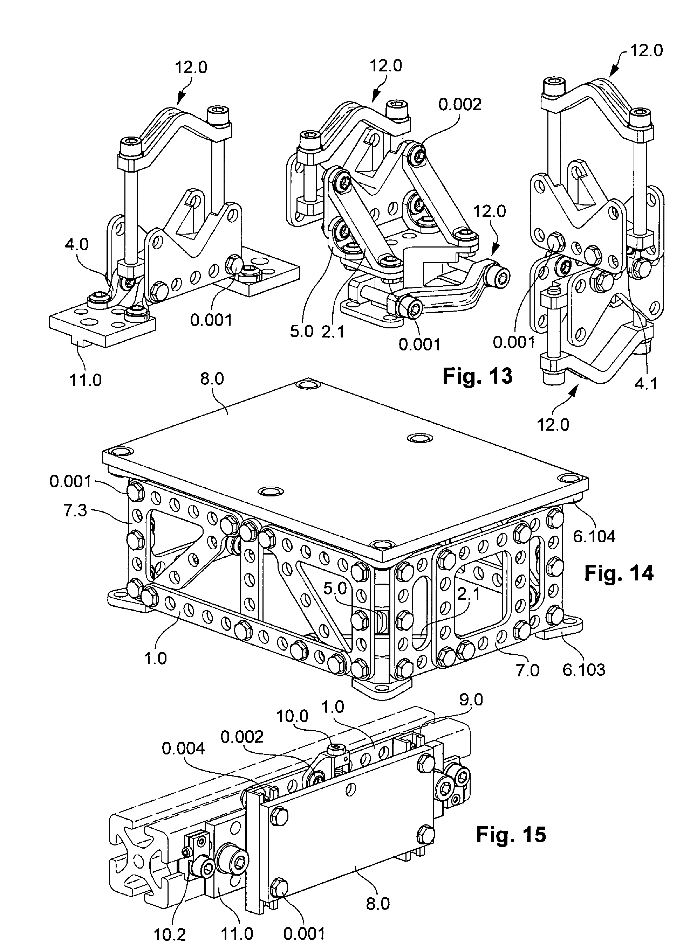

Figur 13 zeigt weitere Anwendungsbeispiele, wobei in einem ersten Beispiel ein Prismamodul 12.0 über vier Scharnierelemente 4.0 an zwei Halterungen NS8 11.0 mittels Hutschrauben 0.001 und Hülsenmuttern 0.002 montiert ist. Über die Halterungen NS8 11.0 kann die Konstruktion an eine Nutschiene montiert und über das Prismamodul 12.0 kann zum Beispiel eine Rohrleitung gehalten werden. In einem zweiten Beispiel sind zwei Prismen 12.0 über deren Seitenflächen mittels zwei 90°-Winkelelemente 5.0 und zwei Winkelstreben 2.1 rechtwinklig zueinander verschraubt, womit beispielsweise eine in einem rechten Winkel verlaufende Rohrleitung gehalten werden kann. In einem dritten Beispiel sind wiederum zwei Prismen 12.0 über deren Halteplatten gegeneinander und um 90° verdreht mittels vier Drallelementen 4.1 verschraubt. Mittels dieser Konstruktion können zum Beispiel sich kreuzende Rohrleitungen gehalten werden.

Figur 14 zeigt eine mögliche Anwendung von Elementen aus den Klassen 1.0 "Stabelemente einfach", 2.1 "Winkelstreben", 5.0 "L90°-Winkelelemente", 6.1 "Stützelemente", 7.0 "90° - Rahmen", 7.3 "90° x 45° +1 - Rahmen", 8.0 "Werkstückträgerplatten", welche durch Hutschrauben 0.001 und Hülsenmuttern 0.002 oder 0.003 verbunden sind und ein Podest bilden. Die verwendeten Elemente dabei sind 2 Stück Stabelemente mit fünf Öffnungen, 2 Stück Stabelemente 1.0 mit elf Öffnungen, 2 Stück Winkelstreben 2.1 für ein gleichschenkliges Dreieck, dessen Schenkel jeweils vier Öffnungen haben, 2 Stück L90°-Winkelelemente, deren Leisten drei und eine Öffnung besitzen, 4 Stück L90°-Winkelelemente mit insgesamt zwei Öffnungen, 8 Stück Stützelemente 6.1 in der sechsten Ausführungsform (vgl. Fig. 6) mit insgesamt drei Öffnungen, 2 Stück 90°-Rahmen, dessen Seiten fünf und neun Öffnungen besitzen, 4 Stück 90°x45°+L25-Rahmen, dessen Seitenleisten sechs, fünf, zwei und fünf Öffnungen enthalten, wobei die ersten zwei und die zweiten zwei dieser vier Seitenleisten rechtwinklig aufeinander stehen, und eine Werkstückträgerplatte 8.0, deren Dimensionen denjenigen von "Stabelementen einfach" mit dreizehn und neun Öffnungen entspricht, die in ihren vier Ecken jeweils eine Öffnung aufweist und zudem in jeder Mitte von längeren Kanten derselben Seite etwas nach innen versetzt eine weitere Öffnung besitzt.

In jeder Ecke derselben Seite der Werkstückträgerplatte 8.0 ist ein Stützelement 6.1 angeschraubt, wobei zwei rechtwinklig aufeinander stehende Leisten des Stützelements 6.1 parallel zu und entlang Kanten der Werkstückträgerplatte 8.0 liegen. Entlang zweier kürzerer Kanten der Werkstückträgerplatte 8.0 sind die Stützelemente 6.1 durch längere Seitenleisten von 90°-Rahmen 7.0 verbunden; entlang längeren Kanten der Werkstückträgerplatte 8.0 wird an beiden Stützelementen 6.1 jeweils ein 90°x45°+L25-Rahmen 7.3 mit derjenigen Öffnung, die den beiden rechtwinklig aufeinander stehenden Seitenleisten mit sechs und fünf Öffnungen gemeinsam ist, angeschraubt, sodass zwei entlang derselben Kante der Werkstückträgerplatte 8.0 liegende 90°x45°+L25-Rahmen 7.3 symmetrisch gegeneinander gerichtet sind und jeweils die sechs Öffnungen enthaltende Seitenleiste entlang dieser Kante liegt. In jeder der beiden Öffnungen, die in der Mitte längerer Kanten derselben Seite der Werkstückträgerplatte 8.0 liegen, ist ein L90°-Winkelelement 5.0 mit insgesamt vier Öffnungen mit einer nur eine Öffnung aufweisenden Leiste so festgeschraubt, dass eine drei Öffnungen enthaltende Leiste parallel zur längeren Kante und zwischen Öffnung der Werkstückträgerplatte 8.0 und Kante liegt. Diese drei Öffnungen aufweisende Leiste des L90°-Winkelelements 5.0 dient mit äusseren Öffnungen der Verschraubung der beiden gegeneinander gerichteten 90°x45°+L25-Rahmen 7.3, deren jeweils letzte Öffnung auf der parallel zur längeren Kante der Werkstückträgerplatte 8.0 liegenden Seitenleiste auf eine äussere, gegen den 90°x45°+L25-Rahmen 7.3 gerichtete Öffnung der 3 Öffnungen enthaltenden Leiste des L90°-Winkelelements 5.0 passt.

In einer mittleren Öffnung der drei Öffnungen enthaltenden Leiste beider L90°-Winkelelemente 5.0 wird rechtwinklig auf die Werkstückträgerplatte 8.0 und in derselben Ebene wie die beiden 90°x45°+L25-Rahmen 7.3 liegend ein Stabelement 1.0 mit fünf Öffnungen festgeschraubt, an dessen anderem Ende ein Stabelement 1.0 mit elf Öffnungen rechtwinklig und mit einer in der Mitte liegenden Öffnung so befestigt, dass zwei Enden dieses Stabelements 1.0 von aussen auf die 90°45°+L25-Rahmen 7.3 zu liegen kommen und die in diesen Enden angebrachten Öffnungen des Stabelements 1.0 mit den im darunterliegenden 90°x45°+L25-Rahmen 7.3 existierenden Öffnungen, welche jeweils eine nicht in einer Ecke liegende Öffnung einer zwei Öffnungen enthaltenden Seitenleiste sind, verschraubt werden können. Jeweils ein weiteres Stützelement 6.1 wird an der Werkstückträgerplatte 8.0 entgegengesetzten Ecken zwischen 90°x45°+L25-Rahmen 7.3 und 90°-Rahmen 7.0 fixiert, sodass dieses spiegelsymmetrisch zum an der Werkstückträgerplatte 8.0 angebrachten Stützelement 6.1 die beiden dort benachbarten Rahmenelemente 7.0 fixiert. Zwei nebeneinander liegende Seitenleisten von jeweils einem 90°x45°+L25-Rahmen 7.3 und einem 90°-Rahmen 7.0 werden zusätzlich in der Mitte ihrer Seitenleisten durch ein L90°-Winkelelement 5.0, das zwei Öffnungen enthält, gegeneinander verschraubt, wobei das L90°-Winkelelement 5.0 auf derselben Seite der Seitenleisten der Rahmenelemente 7.3 zu liegen kommt, wie die rechtwinklig aufeinander stehenden Leisten der an denselben Rahmenelementen 7.3 befestigten Stützelemente 6.1. Die beiden 45°-Winkelstreben 2.1 werden einerseits an einer drittäussersten Öffnung der beiden Stabelemente 1.0 angebracht und andererseits an einer viertäussersten Öffnung der auf derselben Höhe liegenden Seitenleiste des 90°-Rahmens 7.0 festgeschraubt, sodass sie einander diagonal gegenüber liegen.

Schliesslich zeigt die Figur 15 ein weiteres Anwendungsbeispiel, welches im Wesentlichen einen Kreuztisch zeigt. Die Kreuztischplatte ist als rechteckige Werkstückträgerplatte 8.0 ausgebildet, welche in den Eckbereichen vier und bei einer Seite mittig eine Öffnung aufweist. Über die Öffnungen in den Eckbereichen ist die Werkstückträgerplatte 8.0 mittels Hutschrauben 0.001 und Hülsenmutter mit T-Nut-Kopf 0.004 in T-Nutschienen 9.0 montiert, wobei die T-Nutschienen 9.0 zueinander so parallel beabstandet angeordnet sind, dass die seitenmittig angeordnete Öffnung mittig zwischen den T-Nutschienen 9.0 zu liegen kommt. Die T-Nutschienen 9.0 sind wiederum auf Halterungen NS8 11.0 montiert, wobei der quaderförmige Aufsatz der Halterungen NS8 11.0 im rechten Winkel zu den T-Nutschienen 9.0 orientiert sind, wobei die Halterungen NS8 11.0 gemäss Figur 11 auf einer herkömmlichen Nutschiene montiert sind, welche rechtwinklig zu den T-Nutschienen 9.0 orientiert ist. Parallel und seitlich versetzt zu der herkömmlichen Nutschiene, sowie rechtwinklig zu und bezüglich der Werkstückträgerplatte 8.0 gegenüberliegen zu den T-Nutschienen 9.0 ist ein Stabelement 1.0 an die T-Nutschienen 9.0 geschraubt. Auf dieses Stabelement 1.0 ist weiter eine Nachstelleinheit lateral 10.0 so montiert, dass sie zwischen dem Stabelement 1.0 und der Werkstückträgerplatte 8.0 zu liegen kommt. Der Zapfen der Nachstelleinheit lateral 10.0 ragt in die seitenmittige Öffnung der Werkstückträgerplatte 8.0. Bei gelösten Hutschrauben 0.001 der Werkstückträgerplatte 8.0 kann mittels einer Drehung der Stellschraube der Nachstelleinheit lateral 10.0 die Werkstückträgerplatte 8.0 entlang der Längsachse der T-Nutscheinen 9.0 verfahren werden. Schliesslich weist die Konstruktion zwei Nachstelleinheiten lateral "speziell" 10.2 auf, welche an die herkömmliche Nutschiene so montiert sind, dass mittels einer Drehung der erste Gewindeschraube mit Inbuskopf die Halterungen NS8 11.0, und damit auch die Werkstückträgerplatte 8.0 entlang der Längsachse der herkömmlichen Nutschiene verfahren werden kann. In einer schweren Ausführungsform können die Stahldicke 5 mm, der Öffnungsabstand 25 mm und der Öffnungsdurchmesser 10.5 mm betragen.

In den nachfolgend beschriebenen Figuren sind die Hutschraube 1100 und die Hülsenmutter 1200 der ersten Ausführungsform jeweils ohne Gewinde abgebildet, um die wesentlichen Merkmale besser hervorheben zu können.

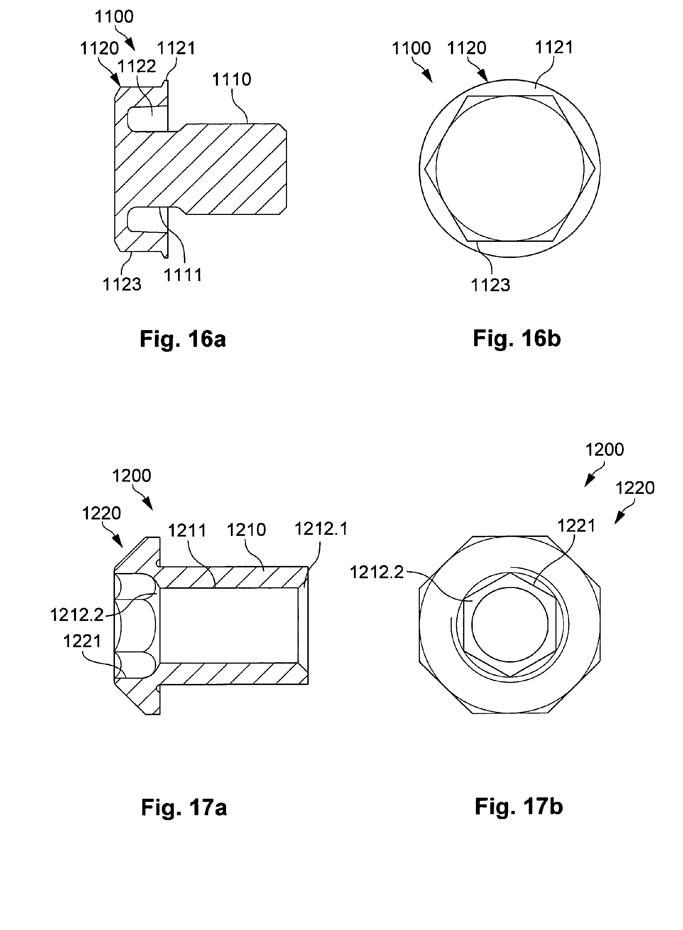

Figur 16a zeigt eine Schnittdarstellung entlang einer Längsachse einer Hutschraube 1100 der ersten Ausführungsform, umfassend einen Gewindeteil 1110 und einen Hut 1120. Der Gewindeteil 1110 weist im Wesentlichen die Form eines Kreiszylinders auf. Das Gewinde des Gewindeteils 1110 weist eine Gewindeachse in der Bildebene auf. Der Gewindeteil 1110 ist koaxial zum Hut 1120 orientiert. Das Gewinde des Gewindeteils 1110 ragt nicht bis zum Hut 1120, sondern geht zuvor in eine Verjüngung 1111 über. Der Unterschied des radial gemessenen Durchmessers zwischen dem Bereich des Gewindes und der Verjüngung 1111 entspricht ungefähr der Gewindetiefe. Der Hut 1120 weist im Wesentlichen die Form eines geraden, einseitig geschlossenen Zylinders mit sechseckiger Grundfläche auf, welcher als Aussensechskant als Kontaktbereich für einen Drehmomentschlüssel dient. Der Hut 1120 und der Gewindeteil sind nun so orientiert und verbunden, dass die Mittelsenkrechte des Sechsecks koaxial mit der Achse des Gewindeteils 1110 verläuft. Die Hutschraube 1100 umfasst eine im Wesentlichen U-förmige Nut 1122, wobei die Öffnung der U-Form axial ausgerichtet ist. Ein dem Hut 1120 zugewandter Bereich der Verjüngung 1111 bildet dabei eine innere Flanke der U-Form, die äussere Flanke wird durch die Innenwand des Huts 1120 gebildet. Der Hut 1120 weist in der dem Gewindeteil 1110 zugewandten Seite einen radial nach aussen stehenden Flansch 1121 auf.

Figur 16b zeigt eine schematische Draufsicht auf den Hut 1120 der Hutschraube 1100 gemäss Figur 16a. Dabei sind der Aussensechskant 1123, sowie der Flansch 1121 ersichtlich. In der vorliegenden ersten Ausführungsform weist der Aussensechskant 1123 im Randbereich axial gegenüber dem Flansch 1121 Arrondierungen auf, welche ein Aufsetzen eines Drehmomentschlüssels vereinfachen kann.

Figur 17a zeigt eine Schnittdarstellung entlang einer Längsachse einer Hülsenmutter 1200 der ersten Ausführungsform, der axial kürzeren Form. Die Hülsenmutter 1200 umfasst eine Hülse 1210 mit einem Innengewinde 1211 und einen koaxial mit der Hülse 1210 verbundenen Schulter 1220. Die Hülse weist beidseitig im Randbereich Abschrägungen 1212.1, 1212.2 der inneren Kanten auf, welche zum Einen den Übergang zum Innengewinde symbolisieren und zum Anderen, insbesondere bei der der Schulter 1220 gegenüberliegenden Kante, das Einführen der Hutschraube 1100 vereinfachen soll. Die Schulter 1220 weist einen Innensechskant 1221 auf, welcher über die Abschrägung 1212.2 in den Innenraum der Hülse 1210 übergeht. Mit der Abschrägung 1212.2 wird nun erreicht, dass ein Sechskantschlüssel (Inbusschlüssel) nicht in den Gewindebereich gelangen kann, wodurch das Gewinde verletzt werden könnte.

Figur 17b zeigt eine schematische Draufsicht auf die Schulter 220 der Hülsenmutter 200 gemäss Figur 17a. Der Kopfteil weist im Wesentlichen eine achteckige Form auf, welche auf der der Hülse 210 gegenüberliegende Seite die Form eines Kreiskegelstumpfes aufweist. Über die achteckige Form kann die Hülsenmutter 200 während des Verschraubens verdrehgesichert werden. Innerhalb des und koaxial zum Kreiskegelstumpf ist der Innensechskant 221 ausgebildet, welcher über die Abschrägung 212.2 in das Innengewinde 211 übergeht.

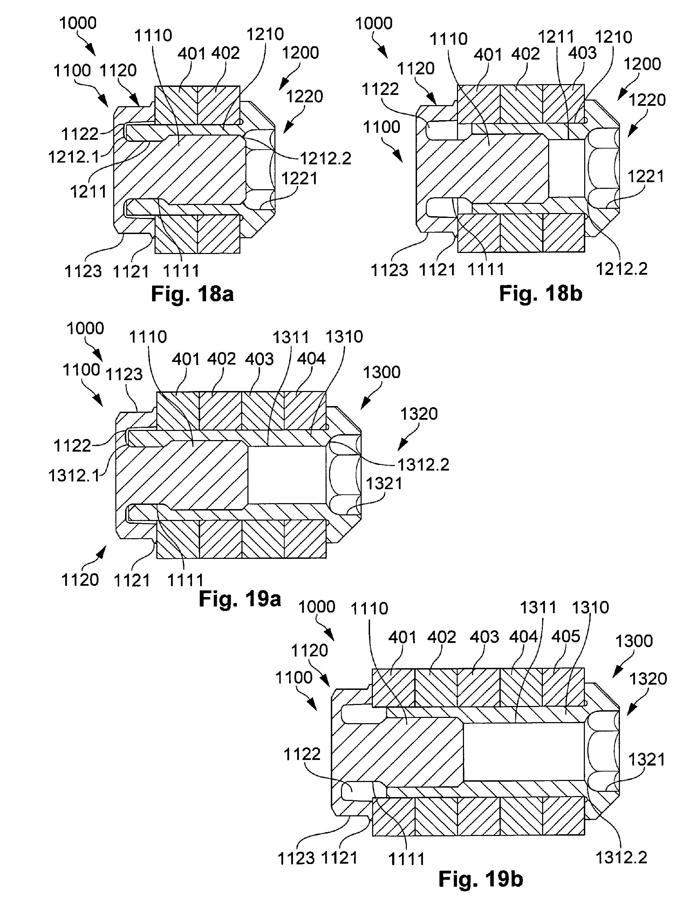

Figur 18a zeigt eine Schnittdarstellung entlang einer Längsachse durch eine Schraubverbindung 1000 der ersten Ausführungsform mit einer kurzen Hülsenmutter 1200 der ersten Ausführungsform, in der zweiten axialen Position, wobei zwei Bauteile 401, 402 verschraubt sind. Die Bauteile 401 weisen kreiszylindrische Öffnungen auf. Die Hülsenmutter 1200 wird durch die Öffnungen hindurch geführt. Anschliessend wird die Hutschraube 1100 mit dem Gewindeteil 1110 in das Innengewinde 1211 der Hülse 1210 der Hülsenmutter 1200 eingeschraubt. Dazu wird ein Sechskantschlüssel, zum Beispiel ein Drehmomentregulierter Schlüssel, zum Einschrauben der Hutschraube 1100 und ein Inbusschlüssel zum Entgegenhalten bei der Hülsenmutter 1200 verwendet. Während des Einschraubens bewegt sich die Hülse 1210 mit dem der Schulter 1220 gegenüberliegenden Bereich in die Nut 1122 des Huts 1120 der Hutschraube 1100 hinein. Die Schraubverbindung 1000 ist dabei so gewählt, dass in verschraubtem und angezogenem Zustand der vorderste Bereich der Hülse 1210 die Nut 1120 knapp nicht berührt, so dass der axiale Druck im Wesentlichen über den Hut 1120 und der Schulter 1220 auf die Bauteile 401, 402 wirkt.

Figur 18b zeigt eine Schnittdarstellung entlang einer Längsachse durch eine Schraubverbindung 1000, im Wesentlichen gemäss der Figur 18a, wobei die Hülsenmutter 1200 in der ersten axialen Position ist und wobei drei Bauteile 401 - 403 verschraubt sind. Im Unterschied zur Figur 18a ragt die Hülse 1210 nicht bis in die Nut 1122 der Hutschraube 1100 hinein, sondern ragt nur bis zum Ende des Gewindes der Hutschraube 1100. Das Gewinde der Hutschraube ist also wie bei der zweiten axialen Position vollständig in Kontakt mit dem Innengewinde 1211 der Hülsenmutter 1200.

Die Figuren 19a und 19b zeigen eine Schnittdarstellung entlang einer Längsachse durch eine Schraubverbindung 1000 der ersten Ausführungsform mit einer langen Hülsenmutter 1300 in der zweiten axialen Position, wobei vier Bauteile 401 - 404 respektive fünf Bauteile 401 - 405 verschraubt sind. Das Prinzip ist grundsätzlich identisch mit demjenigen des in den Figuren 18a und 18b gezeigten. Der Unterschied zu den Figuren 18a und 18b liegt darin, dass die lange Hülsenmutter 1300 der zweiten Ausführungsform um eine doppelte Dicke eines vorliegenden Bauteils 401 länger ausgebildet ist, so dass statt zwei oder drei Bauteile 401, 402 nun vier oder fünf Bauteile 401 - 405 verschraubt werden können. Der Kopfteil der Hülsenmutter 1300 ist identisch mit dem Kopfteil der Hülsenmutter 1200 der ersten Ausführungsform. In den Figuren sind entsprechend statt der tausendzweihunderter-Nummern tausenddreihunderter-Nummern angegeben.

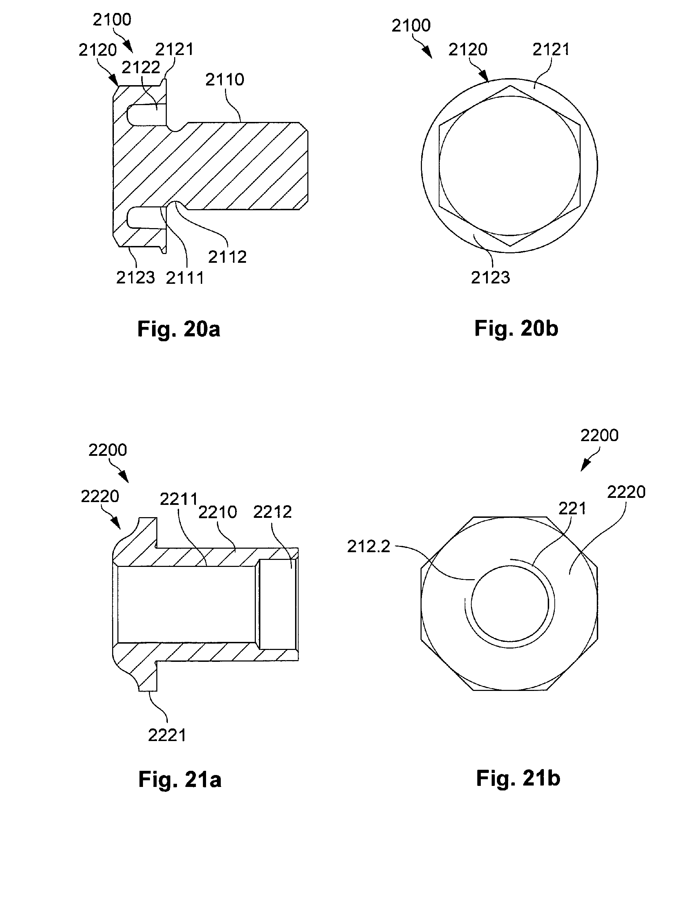

In den nachfolgenden Figuren 20a bis 23b sind die Hutschraube 2100 und die Hülsenmutter 2200 der zweiten Ausführungsform im Hinblick auf die Unterschiede zu der Hutschraube 1100 und der Hülsenmutter 1200 der ersten Ausführungsform beschrieben. Wiederum sind die Gewinde nicht abgebildet, um die wesentlichen Merkmale besser hervorheben zu können.

Die Figur 20a zeigt eine Schnittdarstellung entlang einer Längsachse einer Hutschraube 2100 der zweiten Ausführungsform. Diese unterschiedet sich von der Hutschraube 1100 der ersten Ausführungsform im Wesentlichen dadurch, dass die Verjüngung 2111 in etwa einen Durchmesser aufweist, welcher dem Durchmesser des Gewindetals des Gewindeteils 2110 entspricht. Zwischen der Verjüngung 2111 und dem Gewindeteil 2110 ist eine umlaufende Kerbe 2112 vorgesehen, welche einen geringeren Durchmesser als die Verjüngung 2111 aufweist.

Die Figur. 20b zeigt eine schematische Draufsicht auf den Kopfteil 2120 der Hutschraube gemäss Figur 20a, welche sich nicht von der Draufsicht gemäss Figur 16b unterscheidet.

Die Figur 21a zeigt eine Schnittdarstellung entlang einer Längsachse einer kurzen Hülsenmutter 2200 der zweiten Ausführungsform. Diese unterscheidet sich von der Hülsenmutter 1200 der ersten Ausführungsform dadurch, dass kein Innensechskant vorliegt, sondern das Innengewinde 2211 durch den Kopfteil hindurch geführt ist. An dem dem Kopfteil gegenüberliegenden Ende ist inwendig ein Freistich 2212 vorgesehen. Im Bereich des Freistiches 2212 weist die Hülsenmutter 220 einen grösseren Innendurchmesser als im Bereich des Innengewindes 2211 auf.

Die Figur 21b zeigt eine schematische Draufsicht auf den Kopf der Hülsenmutter 2200 gemäss Figur 21a, wobei im Unterschied zur Hülsenmutter 1200 lediglich der Innensechskant weggelassen ist. Die vorliegende Hülsenmutter 2200 wird daher zum Beispiel mittels eines Schraubenschlüssels über die achteckige Aussenkontur 2321 während dem Verschrauben fixiert.

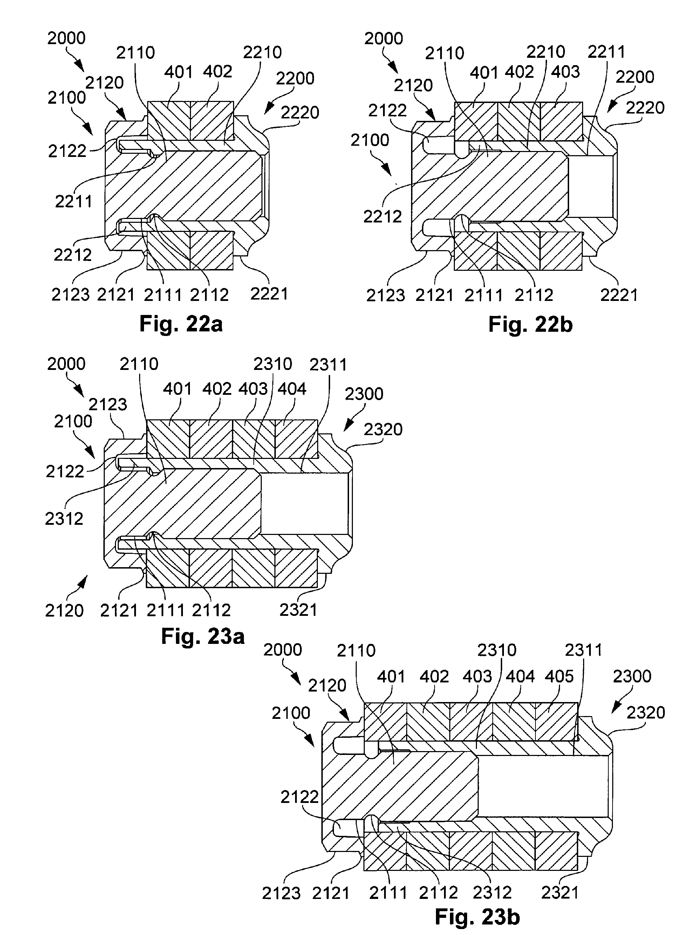

Die Figuren 22a, 22b, 23a und 23b zeigen jeweils eine Schnittdarstellung entlang einer Längsachse durch eine Schraubverbindung 2000 der zweiten Ausführungsform entsprechend den Figuren 18a, 18b, 19a, 19b, wobei im Unterschied die Hülsenmuttern 2200 respektive 2300 und die Hutschraube 2100 gemäss der zweiten Ausführungsform eingesetzt sind.

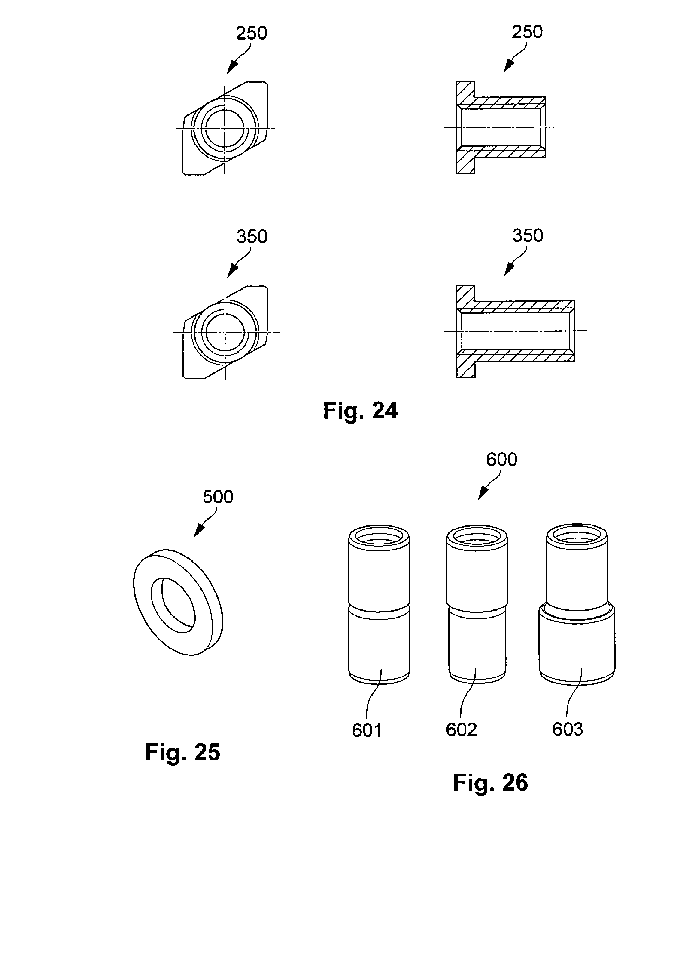

Die Figur 24 zeigt eine Draufsicht und eine Schnittdarstellung entlang einer Längsachse durch eine Hülsenmutter für Nutschienen 250, 350 der langen 350 und der kurzen 250 Ausführungsform. Die Hülsen der Hülsenmutter für Nutschienen 250, 350 entsprechen denjenigen der Hülsenmuttern 1200, 1300. Das Innengewinde verläuft durch die Hülsenmutter für Nutschienen 250, 350 hindurch. Im Unterschied zu letzteren weisen die Hülsenmuttern für Nutschienen 250, 350 in der Draufsicht einen im Wesentlichen parallelogrammförmigen Kopf auf, wobei das Parallelogramm zwei unterschiedliche Höhen aufweist. Die kleinere Höhe ist so bemessen, dass der Kopf von oben in eine hinterschnittene Nutschiene eingeführt werden kann. Durch eine Verdrehung um dessen Längsachse hintergreift der Kopf die hinterschnittenen Flanken der Nutschiene und wird so axial in der Nutschiene fixiert.

In Varianten kann die Hülse der Hülsenmuttern 250, 350 auch gemäss der zweiten Ausführungsform der Hülsenmutter 2300 an dem dem Kopf gegenüberliegenden Ende einen Freistich aufweisen (nicht dargestellt).

Die Figur 25 zeigt eine Distanzscheibe 500, welche zur Längenkompensation der Hülsenmutter/Hutschrauben eingesetzt werden kann. Die Distanzscheibe ist herkömmlich ausgebildet und weist einen der Hülsen 210, 310 entsprechenden Innendurchmesser auf. Vorzugsweise beträgt die Dicke der Distanzscheibe 1.5 mm, womit durch Kombination mehrerer Distanzscheiben unterschiedliche Abstände eingestellt werden können. Die Dicke der Distanzscheiben kann auch anders bemessen sein, oder es können mehrere unterschiedliche Dicken vorliegen.

Fig. 26 Schrägansichten dreier Ausführungsformen von Stufenstiften 601, 602, 603, welche jeweils hülsenartig aufgebaut sind und ein durchgehendes Gewinde, vorzugsweise ein M5-Gewinde aufweisen. Bezüglich einer Längsachse der Stufenstifte 601, 602, 603 weisen diese mittig eine umlaufende Kerbe auf. Die Kerbe teilt den Stufenstift 601, 602, 603 in zwei Bereiche auf, wobei die Bereiche des ersten Stufenstifts 601 identische und diejenigen des zweiten Stufenstifts 602 und des dritten Stufenstifts 603 unterschiedliche Durchmesser aufweisen. Die Durchmesser sind auf unterschiedliche DIN-Durchmesser, respektive auf die Durchmesser der Hülsenmutter 1200 oder 2200 angepasst. Der vorliegende Stufenstift 601 weist in beiden Bereichen einen Durchmesser von 6.5 mm auf, welcher den Hülsenmuttern 1200, 2200 der leichten Ausführungsform entspricht. Der Stufenstift 602 weist im ersten Bereich einen Durchmesser von 6.5 mm und im zweiten Bereich einen DIN-Durchmesser von 6 mm auf. Der Stufenstift 603 weist im ersten Bereich einen Durchmesser von 6.5 mm und im zweiten Bereich einen DIN-Durchmesser von 8 mm auf. Die Stufenstifte 601, 602, 603 können als Übergangselemente zu DIN-Normierten Bauteilen eingesetzt werden.

Der Aussendurchmesser der Hülse beträgt für die leichte Ausführungsform 6.5 mm und für die schwere Ausführungsform 10.5 mm. Die Hülse weist eine H-Toleranz von 8 auf. Für die schwere Ausführungsform würde der 6.5 mm-Durchmesser der Stufenstifte 601, 602, 603 entsprechend durch einen 10.5 mm-Durchmesser ersetzt werden. Der Abstand zwischen den Kopfteilen in der zweiten axialen Position beträgt in der ersten, kürzeren Variante der Hülsenmutter 6 mm für die leichte respektive 10 mm für die schwere Ausführungsform und in der zweiten, längeren Variante der Hülsenmutter 12mm für die leichte respektive 20 mm für die schwere Ausführungsform.

Zusammenfassend ist festzustellen, dass erfindungsgemäss ein modulare System geschaffen wird, womit eine Konstruktion von besonders soliden und präzisen Gefügen ermöglicht wird, wobei mittels der Gefüge im Maschinen-, Sondermaschinen- und Anlagenbau Maschinenelemente verknüpft werden können.

**Patentansprüche**

1. Modulares System zur Herstellung von Gefügen für den Maschinen-, Sondermaschinen- und Anlagenbau, umfassend mehrere länglich geformte Bauteile, welche je mindestens zwei Öffnungen aufweisen, wobei zwei Bauteile über ein Verbindungselement (1000) spielfrei verbindbar sind.

2. Modulares System nach Anspruch 1, **dadurch gekennzeichnet, dass** das Verbindungselement (1000) derart ausgeführt ist, dass eine Verstiftung und eine Verschraubung mindestens zweier Bauteile, welche so angeordnet sind, dass jeweils eine Öffnung der mindestens zwei Bauteile koaxial angeordnet sind, durch diese Öffnungen erreichbar ist.

3. Modulares System nach Anspruch 1 oder 2, wobei die Bauteile aus mindestens zwei der folgenden Klassen ausgewählt sind:

   a) Stabelemente (1.0, 1.1), mit einer oder mehreren parallelen Reihen von Öffnungen, wobei benachbarte Öffnungen in einer Reihe und gegebenenfalls die Reihen untereinander einen Abstand a aufweisen;

   b) Linearstreben (2.0), mit einer Reihe von Öffnungen, wobei benachbarte Öffnungen zueinander einen Abstand $\sqrt{2}$ a aufweisen;

   c) Z-Streben (2.2), mit zwei endständig angeordneten Öffnungen, welche zueinander parallel ausgerichtet sind und wobei durch die Öffnungen verlaufende Achsen in der Z-Ebene liegen;

   d) C-Streben (2.3), welche zwei koaxiale Öffnungen aufweisen;

   e) Winkelstreben (2.1), welche endständig zwei zueinander rechtwinklig orientierte Öffnungen aufweisen, wobei durch die Öffnungen verlaufende Achsen einen Schnittpunkt aufweisen;

   f) Eckelemente (6.0), welche drei Seitenflächen umfassen, die paarweise orthogonal über einen Randbereich miteinander verbunden sind und wobei die Seitenflächen jeweils mindestens eine Öffnung aufweisen;

   g) Rahmenelemente (7.0, 7.1), ausgebildet als Rechteckrahmen mit Öffnungen, wobei benachbarte Öffnungen zueinander einen Abstand a aufweisen, und/oder welche im Wesentlichen als rechtwinklige, gleichschenklige Dreiecke ausgebildet sind, wobei bei der Hypotenuse ein Abstand zwischen benachbarten Öffnungen $\sqrt{2}$ a und bei den Katheten a beträgt;

   h) Werkstückträgerplatte (8.0) zum Anbringen von Anlageelementen, welche als rechteckige Platten ausgebildet sind und in den Ecken Öffnungen aufweisen;

   i) Nutschienen (9.0), wobei Seitenwände hinterschnitten sind und in einem Nutboden im Abstand a Öffnungen angeordnet sind und Halteelemente, welche eine Platte mit Öffnungen und ein mit der Platte verschraubtes Halteteil umfassen, wobei in einem in der Nutschiene fixierten Zustand das Halteteil die hinterschnittenen Seitenwände hintergreift.

4. Modulares System einem der Ansprüche 1 bis 3, **dadurch gekennzeichnet, dass** die Öffnungen der Elemente DIN H8 toleriert sind.

5. Modulares System nach einem der Ansprüche 1 bis 4, **dadurch gekennzeichnet, dass** es ein als Regelelement (1.2, 3.0 - 3.3) ausgebildetes Bauteil umfasst, welches zwei endständige Öffnungen aufweist, wobei ein Abstand zwischen den beiden Öffnungen stufenlos in einem vorgegebenen Bereich variierbar ist.

6. Modulares System nach Anspruch 5, **dadurch gekennzeichnet, dass** das Regelelement (3.0 - 3.3) zwei Elemente umfasst, welche zueinander linear verfahrbar angeordnet und mittels einer Klemmschraube relativ zueinander fixierbar sind.

7. Modulares System nach Anspruch 6, **dadurch gekennzeichnet, dass** der Abstand zwischen den Öffnungen mittels einer Stellschraube einstellbar ist.

8. Modulares System nach einem der Ansprüche 1 bis 7, **dadurch gekennzeichnet, dass** es eine Einstelleinheit (10.0, 10.1) umfasst, welche ein Fixierelement und eine am Fixierelement drehbar gelagerte Schraube umfasst sowie zusätzlich eine Öffnung aufweist.

9. Modulares System nach Anspruch 8, **dadurch gekennzeichnet, dass** die Einstelleinheit (10.0, 10.1) weiter eine Fixiervorrichtung zum Fixieren der Schraube umfasst, wobei die Fixiervorrichtung insbesondere als Klemmschraube ausgebildet ist, so dass bei angezogener Klemmschraube die Schraube festklemmbar ist.

10. Modulares System nach Anspruch 8 oder 9, **dadurch gekennzeichnet, dass** die Schraube am Fixierelement drehbar und axial fest gelagert ist und die Einstelleinheit ein Stellelement umfasst, welches ein mit der Schraube zusammenwirkendes Innengewinde sowie einen Kontaktbereich für eine Öffnung aufweist.

11. Modulares System nach einem der Ansprüche 1 bis 10, **dadurch gekennzeichnet, dass** das Verbindungselement als Schraubverbindung (1000) ausgebildet ist, mit einem ersten Element (1100), umfassend ein Aussengewinde (1110) und einen ersten Kopfteil (1120), sowie einem zweiten Element (1200; 1300), umfassend ein Innengewinde (1211; 1311) und einen zweiten Kopfteil (1220; 1320), **dadurch gekennzeichnet, dass** beim in das zweite Element (1200; 1300) vollständig eingeschraubten ersten Element (1100) eine Oberfläche zwischen dem ersten Kopfteil (1120) und dem zweiten Kopfteil (1220; 1320) als glatter Kreiszylinder (1210; 1310) ausgebildet ist, welcher insbesondere zur Verstiftung geeignet ist.

12. Modulares System nach Anspruch 11, **dadurch gekennzeichnet, dass** das erste Element (1100) mit dem zweiten Element (1200; 1300) in axial mindestens zwei Positionen verschraubbar ist, wobei der Abstand zwischen dem ersten (1120) und dem zweiten Kopfteil (1220; 1320) in der ersten axialen Position grösser ist als in der zweiten axialen Position.

13. Modulares System nach Anspruch 11 oder 12, **dadurch gekennzeichnet, dass** das erste Element als Hutschraube (1100) ausgebildet ist.

14. Modulares System nach einem der Ansprüche 11 bis 13, **dadurch gekennzeichnet, dass** der Aussengewindeteil (1110) eine zum ersten Kopfteil (1120) benachbarte umlaufende Nut (1122) umfasst.

15. Modulares System nach einem der Ansprüche 11 bis 14, **dadurch gekennzeichnet, dass** das zweite Element als Hülsenmutter (1200; 1300) ausgebildet ist, wobei die Hülse als glatter Kreiszylinder (1210; 1310) ausgebildet ist, welcher insbesondere zur Verstiftung geeignet ist, und ein Innengewinde (1211; 1311) aufweist.

**Fig. 1**

**Fig. 2**

**Fig. 3**

**Fig. 4**

5.1

5.0

5.2

5.3

**Fig. 5**

6.0

6.1

6.1

6.1

**Fig. 6**

**Fig. 7**

8.0

**Fig. 8**

0.001

0.005

0.004

9.0

**Fig. 9**

0.001

10.1

10.1

10.2

10.2

0.004

10.0

**Fig. 10**

11.0

11.5

11.6

**Fig. 11**

Fig. 12

12.0

12.0

0.002

12.0

4.0

0.001

5.0 2.1

0.001

0.001

11.0

8.0

4.1

12.0

**Fig. 13**

0.001

7.3

6.104

5.0

2.1

**Fig. 14**

1.0

7.0

6.103

10.0 1.0

9.0

0.004

0.002

**Fig. 15**

10.2

11.0

0.001

8.0

**Fig. 16a**

**Fig. 16b**

**Fig. 17a**

**Fig. 17b**

Fig. 18a

Fig. 18b

Fig. 19a

Fig. 19b

2100

2120  2121

2122  2110

2123  2111

2112

**Fig. 20a**

2100

2120  2121

2123

**Fig. 20b**

2200

2220

2211  2210  2212

2221

**Fig. 21a**

2200

2220

221

212.2

**Fig. 21b**

**Fig. 22a**

**Fig. 22b**

**Fig. 23a**

**Fig. 23b**

250

250

350

350

**Fig. 24**

500

600

601    602    603

**Fig. 25**

**Fig. 26**

**EP 2 511 538 A1**

Europäisches
Patentamt

European
Patent Office

Office européen
des brevets

**EUROPÄISCHER RECHERCHENBERICHT**

Nummer der Anmeldung

EP 11 40 5242

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | WO 2010/133728 A1 (TECEDOR ROTAECHE DANIEL [ES]; TECEDOR ROTAECHE ALVARO [ES]) 25. November 2010 (2010-11-25) | 1,3 | INV. F16B5/02 F16B19/02 |
| Y | * Zusammenfassung; Abbildung 5 * | 2 | |
| X | GB 1 339 899 A (OETIKER HANS) 5. Dezember 1973 (1973-12-05) | 1 | |
| Y | * Seite 2, Zeilen 15-48 * | 2 | |
| A | FR 1 126 577 A (A JACQUOT ETS) 26. November 1956 (1956-11-26) * Abbildung 1 * | 1 | |
| X | WO 00/01457 A1 (MEGAMEC KB [SE]; NORDENSTAM CLAES [SE]; JAVER INGVAR [SE]) 13. Januar 2000 (2000-01-13) | 1,3 | |
| Y | * Seite 3, Zeilen 9-28 * | 2 | |
| X | DE 10 2010 040488 A1 (BERGNER VERBINDUNGSTECHNIK GMB [DE]) 17. März 2011 (2011-03-17) | 11,12,15 | |
| Y | * Absatz [0022] * | 2 | RECHERCHIERTE SACHGEBIETE (IPC) |
| X | US 2 632 355 A (BECKER PHILIP D) 24. März 1953 (1953-03-24) * Spalte 2, Zeilen 31-44 * | 11,12,15 | F16B |
| X | US 4 033 243 A (KIRRISH HAIL ET AL) 5. Juli 1977 (1977-07-05) * Spalte 5, Zeile 42 - Spalte 6, Zeile 10 * | 11-14 | |
| X | US 4 490 083 A (REBISH EDWARD J [US]) 25. Dezember 1984 (1984-12-25) * Spalte 4, Zeile 55 - Spalte 5, Zeile 3 * | 11,13-15 | |

~~Der vorliegende Recherchenbericht wurde für alle Patentans~~prüche erstellt

| Recherchenort | Abschlußdatum der Recherche | Prüfer |
|---|---|---|
| München | 18. Januar 2012 | Rochus, Johann |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

Europäisches
Patentamt

European
Patent Office

Office européen
des brevets

Nummer der Anmeldung

EP 11 40 5242

## GEBÜHRENPFLICHTIGE PATENTANSPRÜCHE

Die vorliegende europäische Patentanmeldung enthielt bei ihrer Einreichung Patentansprüche, für die eine Zahlung fällig war.

☐ Nur ein Teil der Anspruchsgebühren wurde innerhalb der vorgeschriebenen Frist entrichtet. Der vorliegende europäische Recherchenbericht wurde für jene Patentansprüche erstellt, für die keine Zahlung fällig war, sowie für die Patentansprüche, für die Anspruchsgebühren entrichtet wurden, nämlich Patentansprüche:

☐ Keine der Anspruchsgebühren wurde innerhalb der vorgeschriebenen Frist entrichtet. Der vorliegende europäische Recherchenbericht wurde für die Patentansprüche erstellt, für die keine Zahlung fällig war.

## MANGELNDE EINHEITLICHKEIT DER ERFINDUNG

Nach Auffassung der Recherchenabteilung entspricht die vorliegende europäische Patentanmeldung nicht den Anforderungen an die Einheitlichkeit der Erfindung und enthält mehrere Erfindungen oder Gruppen von Erfindungen, nämlich:

Siehe Ergänzungsblatt B

☐ Alle weiteren Recherchengebühren wurden innerhalb der gesetzten Frist entrichtet. Der vorliegende europäische Recherchenbericht wurde für alle Patentansprüche erstellt.

☐ Da für alle recherchierbaren Ansprüche die Recherche ohne einen Arbeitsaufwand durchgeführt werden konnte, der eine zusätzliche Recherchengebühr gerechtfertigt hätte, hat die Recherchenabteilung nicht zur Zahlung einer solchen Gebühr aufgefordert.

☒ Nur ein Teil der weiteren Recherchengebühren wurde innerhalb der gesetzten Frist entrichtet. Der vorliegende europäische Recherchenbericht wurde für die Teile der Anmeldung erstellt, die sich auf Erfindungen beziehen, für die Recherchengebühren entrichtet worden sind, nämlich Patentansprüche:

1, 2, 4, 11-15(vollständig); 3(teilweise)

☐ Keine der weiteren Recherchengebühren wurde innerhalb der gesetzten Frist entrichtet. Der vorliegende europäische Recherchenbericht wurde für die Teile der Anmeldung erstellt, die sich auf die zuerst in den Patentansprüchen erwähnte Erfindung beziehen, nämlich Patentansprüche:

☐ Der vorliegende ergänzende europäische Recherchenbericht wurde für die Teile der Anmeldung erstellt, die sich auf die zuerst in den Patentansprüchen erwähnte Erfindung beziehen (Regel 164 (1) EPÜ).

Europäisches
Patentamt

European
Patent Office

Office européen
des brevets

**MANGELNDE EINHEITLICHKEIT
DER ERFINDUNG
ERGÄNZUNGSBLATT B**

Nummer der Anmeldung

EP 11 40 5242

Nach Auffassung der Recherchenabteilung entspricht die vorliegende europäische Patentanmeldung nicht den Anforderungen an die Einheitlichkeit der Erfindung und enthält mehrere Erfindungen oder Gruppen von Erfindungen, nämlich:

1. Ansprüche: 1, 2, 4(vollständig); 3(teilweise)

Die 1. Gruppe beschreibt ein modulares System zur Herstellung von Gefügen für den Maschinen-, Sondermaschinen- und Anlagenbau, mehrere länglich geformte Bauteile mit je mindestens zwei Öffnungen umfassend. Zwei dieser Bauteile sind über ein Verbindungselement zur Verschraubung und Verstiftung spielfrei über die koaxiale Anordnung der Öffnungen verbindbar. Die Bauteile umfassen Stabelemente und Nutschienen (ohne Halteelemente).

---

2. Anspruch: 3(teilweise)

Die 2. Gruppe umfasst als Linearstreben ausgebildete Bauteile.

---

3. Anspruch: 3(teilweise)

Die 3. Gruppe umfasst als Z-Streben ausgebildete Bauteile.

---

4. Anspruch: 3(teilweise)

Die 4. Gruppe umfasst als C-Streben ausgebildete Bauteile.

---

5. Anspruch: 3(teilweise)

Die 5. Gruppe umfasst als Winkelstreben ausgebildete Bauteile.

---

6. Anspruch: 3(teilweise)

Die 6. Gruppe umfasst als Eckelemente ausgebildete Bauteile.

---

7. Anspruch: 3(teilweise)

Die 7. Gruppe umfasst als Rahmenelemente ausgebildete Bauteile.

---

8. Anspruch: 3(teilweise)

Die 8. Gruppe umfasst als Werkstückträgerplatten ausgebildete Bauteile.

---

Europäisches
Patentamt

European
Patent Office

Office européen
des brevets

**MANGELNDE EINHEITLICHKEIT
DER ERFINDUNG
ERGÄNZUNGSBLATT B**

**Nummer der Anmeldun**

EP 11 40 5242

Nach Auffassung der Recherchenabteilung entspricht die vorliegende europäische Patentanmeldung nicht den Anforderungen an die Einheitlichkeit der Erfindung und enthält mehrere Erfindungen oder Gruppen von Erfindungen, nämlich:

9. Anspruch: 3(teilweise)

  Die 9. Gruppe umfasst als Nutschienen ausgebildete Bauteile mit Halteteilen.

    ---

10. Ansprüche: 5-7

  Die 10. Gruppe umfasst ein als Regelelement ausgebildetes Bauteil.

    ---

11. Ansprüche: 8-10

  Die 11. Gruppe umfasst ein als Einstelleinheit ausgebildetes Bauteil.

    ---

12. Ansprüche: 11-15

  Die 12. Gruppe umfasst ein Schraubelement für das modulare System.

    ---

**ANHANG ZUM EUROPÄISCHEN RECHERCHENBERICHT**
**ÜBER DIE EUROPÄISCHE PATENTANMELDUNG NR.**                    EP 11 40 5242

In diesem Anhang sind die Mitglieder der Patentfamilien der im obengenannten europäischen Recherchenbericht angeführten
Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

18-01-2012

| Im Recherchenbericht angeführtes Patentdokument | Datum der Veröffentlichung | Mitglied(er) der Patentfamilie | Datum der Veröffentlichung |
|---|---|---|---|
| WO 2010133728 A1 | 25-11-2010 | ES 2358942 A1<br>WO 2010133728 A1 | 17-05-2011<br>25-11-2010 |
| GB 1339899 A | 05-12-1973 | KEINE | |
| FR 1126577 A | 26-11-1956 | KEINE | |
| WO 0001457 A1 | 13-01-2000 | AT 363323 T<br>AU 760733 B2<br>AU 4947999 A<br>BR 9911717 A<br>CA 2336056 A1<br>CN 1309577 A<br>CZ 20010031 A3<br>EP 1094872 A1<br>HU 0102601 A2<br>ID 28951 A<br>JP 2002519606 A<br>MX PA00012935 A<br>PL 345384 A1<br>RU 2218967 C2<br>SE 512681 C2<br>SE 9802383 A<br>US 6475055 B1<br>WO 0001457 A1<br>ZA 200007685 A | 15-06-2007<br>22-05-2003<br>24-01-2000<br>20-03-2001<br>13-01-2000<br>22-08-2001<br>13-06-2001<br>02-05-2001<br>28-11-2001<br>19-07-2001<br>02-07-2002<br>10-04-2002<br>17-12-2001<br>20-12-2003<br>02-05-2000<br>04-01-2000<br>05-11-2002<br>13-01-2000<br>25-06-2001 |
| DE 102010040488 A1 | 17-03-2011 | KEINE | |
| US 2632355 A | 24-03-1953 | KEINE | |
| US 4033243 A | 05-07-1977 | AU 506368 B2<br>AU 2119277 A<br>CA 1059805 A1<br>DE 2700665 A1<br>DK 32177 A<br>ES 455358 A1<br>FR 2339767 A1<br>GB 1561993 A<br>HK 33980 A<br>IT 1125187 B<br>JP 1161223 C<br>JP 52094285 A<br>JP 57054379 B<br>SE 426729 B<br>SE 7700912 A | 20-12-1979<br>20-07-1978<br>07-08-1979<br>04-08-1977<br>31-07-1977<br>16-04-1981<br>26-08-1977<br>05-03-1980<br>01-07-1980<br>14-05-1986<br>10-08-1983<br>08-08-1977<br>17-11-1982<br>07-02-1983<br>31-07-1977 |

EPO FORM P0461

Für nähere Einzelheiten zu diesem Anhang : siehe Amtsblatt des Europäischen Patentamts, Nr.12/82

**ANHANG ZUM EUROPÄISCHEN RECHERCHENBERICHT
ÜBER DIE EUROPÄISCHE PATENTANMELDUNG NR.**

EP 11 40 5242

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

18-01-2012

| Im Recherchenbericht angeführtes Patentdokument | Datum der Veröffentlichung | Mitglied(er) der Patentfamilie | Datum der Veröffentlichung |
|---|---|---|---|
| | | US 4033243 A <br> ZA 7607515 A | 05-07-1977 <br> 30-11-1977 |
| US 4490083 A | 25-12-1984 | KEINE | |

Für nähere Einzelheiten zu diesem Anhang : siehe Amtsblatt des Europäischen Patentamts, Nr.12/82

EPO FORM P0461